# FASCICULE DE BREVET EUROPEEN

(11) **EP 2 225 285 B1**
(45) Date de publication et mention de la délivrance du brevet: **04.04.2012**
(21) Numéro de dépôt: 08867237.3
(22) Date de dépôt: 23.12.2008
(51) Int. Cl.: C08F 2/46, C08L 83/06, C09D 11/10, C09D 163/00, C09D 183/06, C08L 63/00, C09J 163/00, C09J 183/06

(54) **PROCEDE DE REALISATION D'UN FILM OU REVETEMENT DUR A PARTIR D'UNE COMPOSITION RETICULABLE/POLYMERISABLE PAR VOIE CATIONIQUE COMPRENANT UN BORATE DE IODONIUM ET DEGAGEANT UNE ODEUR ACCEPTABLE**
VERFAHREN ZUR HERSTELLUNG EINES HARTFILMS ODER EINER BESCHICHTUNG MIT AKZEPTABLEM GERUCH AUS EINER KATIONISCH VERNETZBAREN/POLYMERISIERBAREN ZUSAMMENSETZUNG MIT EINEM IODONIUMBORAT
METHOD FOR PREPARING A HARD FILM OR COATING FROM A CATIONICALLY CROSSLINKABLE/POLYMERIZABLE COMPOSITION COMPRISING AN IODONIUM BORATE AND GIVING OFF AN ACCEPTABLE ODOUR

(30) Priorité: 27.12.2007 FR 0760393
(43) Date de publication de la demande: 08.09.2010
(73) Titulaire: Bluestar Silicones France SAS, 69003 Lyon (FR)
(72) Inventeur: SCHNEIDER, Sophie, F-69360 Ternay (FR); FRANCES, Jean-Marc, F-69330 Meyzieu (FR)
(74) Mandataire: Cabinet Plasseraud
(86) Numéro de dépôt international: PCT/EP2008/068278
(87) Numéro de publication internationale: WO 2009/083564

(56) Documents cités:
- WO-A-2005/120439
- FR-A- 2 766 490

## Description

Le domaine de l'invention est celui des films ou revêtements durs obtenus à partir de compositions à base de monomères, oligomères et/ou polymères susceptibles d'être impliqués dans des réactions de polymérisation(s) et/ou de réticulation(s) par voie cationique, comprenant des radicaux fonctionnels réactifs aptes à former des pontages intra et inter-caténaires, de manière à obtenir un film, un revêtement ou un matériau massique (par exemple composite) polymérisé et/ou réticulé ayant une certaine dureté et une certaine tenue mécanique.

Plus précisément, la présente invention a pour objet un nouveau procédé de réalisation d'un film ou d'un revêtement dur, à partir d'une composition de polymérisation et/ou de réticulation par voie cationique comprenant au moins un monomère, oligomère et/ou polymère réticulable et/ou polymérisable à groupements organofonctionnels réactifs et au moins un système amorceur comportant :
⇒ au moins un photoamorceur (ou photoinitiateur) à base d'au moins un borate de iodonium permettant l'initiation et le déroulement de réactions de formations de polymères et/ou de résines (issues d'une réticulation),
⇒ et éventuellement au moins un photosensibilisateur électrodonneur qui agit comme un relais d'énergie pour le photoamorceur.

Les réactions plus particulièrement concernées sont celles dans lesquelles des agents cationiques agissent comme promoteurs directs des liaisons inter et/ou intra-caténaires.

En général, ces réactions se produisent par activation photochimique et/ou thermique et/ou par faisceau d'électrons. A titre d'exemple pratique, l'énergie lumineuse d'un rayonnement U.V. permet la formation de protagonistes actifs, par exemple par coupure de liaisons, et ainsi le déclenchement des réactions de polymérisation et/ou réticulation est effectué.

Dans la présente description, les polymères et/ou résines obtenus sont préparés à partir de monomères, oligomères et/ou polymères qui sont soit (1) de nature organique, notamment uniquement hydrocarbonée, soit (2) de nature poly-organosiloxane, et comprennent dans leur structure des groupements organo-fonctionnels, par exemple du type époxyde, oxétannes, et/ou alkényl-éther, qui réagissent par voie cationique et à l'aide des nouveaux systèmes amorceurs selon l'invention décrits ci-après. On peut également en plus utiliser (3) des monomères, oligomères et/ou polymères avec des groupements acryliques, par exemple acryliques purs ou méthacryliques, qui peuvent être ajoutés dans le milieu de polymérisation cationique.

Dans le procédé de l'invention les compositions comprennent les matériaux de base (monomères, oligomères et/ou polymères) polymérisables et/ou réticulables par voie cationique, les systèmes amorceurs décrits ci-après, et éventuellement un ou plusieurs additifs choisis parmi ceux généralement connus dans les applications auxquelles sont destinées ces compositions, c'est-à-dire les films et revêtements durs.

Par exemple, ces compositions peuvent notamment rentrer dans la composition d'encres ou de vernis. Ces vernis sont des films ou des revêtements durs, qui ont par exemple les propriétés suivantes: imprimabilité, anti-rayures, anti-salissures et/ou anti-buée et qui sont e.g. appliqués sur des objets tels que des articles ou des supports solides, notamment support papier, film polymère de type polyester ou polyoléfine, support aluminium, et/ou support fer blanc. Certains de ces vernis peuvent être des vernis alimentaires utilisés par exemple e.g. sur des emballages de produits alimentaires.

Ces compositions peuvent également servir de matière première pour la réalisation de revêtements anti-adhérents sur des supports divers notamment du papier, carton ou analogues, ou bien encore polymère (film).

EP-0 562 897 décrit des amorceurs de polymérisation et/ou réticulation, par exemple photochimique, associés à des monomères, oligomères et/ou polymères comprenant dans leur structure des groupements organofonctionnels réactifs. En particulier, EP-0 562 897 divulgue une composition comportant : 100 parties en poids de monomère époxydé UVR-6110 TM (3,4-époxycyclohexylméthyl-3,4-époxycyclohexane carboxylate commercialisé par Union Carbide), et 2 parties en poids de photoamorceur [B(C₆F₅)₄]⁻, [(CH(CH₃)₂-C₆H₄)-I-C₆H₄-CH₃]⁺ : 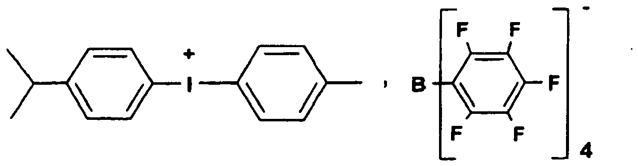 en solution à 50 % en poids dans du méthanol.

Cette composition est destinée à la réalisation de revêtements sur papier à partir de monomères époxydés polymérisés et réticulés par irradiation sous U.V. Pour apprécier les performances d'amorceur, on évalue la réactivité du couple substrat/amorceur et la vitesse de polymérisation/réticulation, au travers de la vitesse de défilement nécessaire au durcissement de la couche enduite sur le papier ainsi qu'au travers du nombre de passages. Les résultats mesurés sont très bons, mais il n'en demeure pas moins que, pour satisfaire aux exigences de productivité des applicateurs, les systèmes amorceurs se doivent d'être de plus en plus performants. Ils doivent donc permettre d'atteindre des réactivités et des vitesses de polymérisation/réticulation aussi élevées que possible, de manière à pouvoir augmenter les cadences d'enduction.

Pour perfectionner les systèmes amorceurs selon l'EP-A-0 562 897, le WO-A-99/05181 propose de nouveaux systèmes amorceurs mis au point pour satisfaire aux exigences de productivité et de fabrication de plus en plus élevées et comprenant au moins un borate d'onium et au moins une benzophénone. Les compositions polymérisables et/ou réticulables incluant ces nouveaux sytèmes amorceurs et divulguées dans WO-A-99/05181 sont e.g. les suivantes:
- Monomère ou polymère polymérisable ou réticulable : 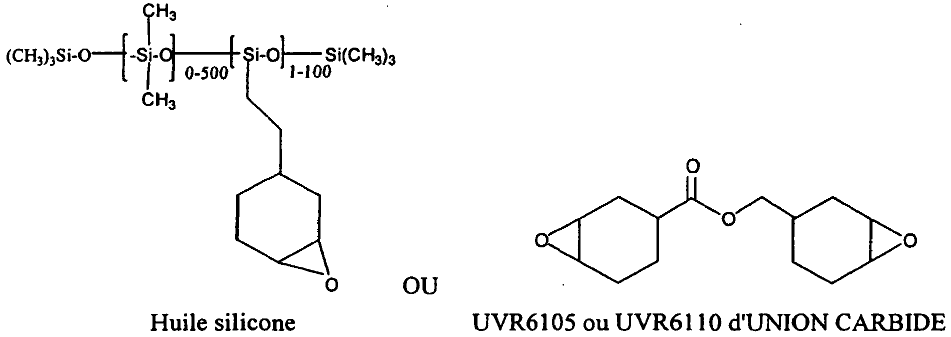
- Système photoamorceur :
   ⇒ Photoamorceur borate d'onium [B(C₆F₅)₄]⁻, [(CH(CH₃)₂-C₆H₄)-I-C₆H₄-CH₃]⁺
   ⇒ Photoamorceur benzophénone 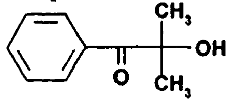
   ⇒ Photosensibilisateur : chlore-1 propoxy-4 thioxanthone 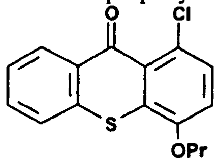
- Solvant : alcool TONE POLYOL® 301 d'UNION CARBIDE.

Selon le WO-A-99/05181, on mélange le système photoamorceur ci-dessus :
⇒ avec UVR6105 ou UVR6110, une base pigmentaire concentrée (oxyde de titane de type rutile commercialisé sous la référence R960 par la société DUPONT DE NEMOURS) et un agent de surface BYK 361 de la société BYK pour obtenir des encres blanches,
⇒ avec UVR6105 ou UVR6110 et l'agent de surface BYK 361 seul pour obtenir un vernis organique,
⇒ ou avec l'huile silicone pour obtenir un un vernis silicone.

La demande PCT WO-A-2005/120439 concerne une composition dentaire photopolymérisable comprenant :
- un monomère polymérisable : 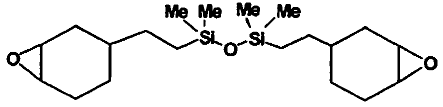
- un système photoamorceur (3,3% en poids par rapport au monomère) à base de :

   [B(C₆F₅)₄]⁻, [(CH(CH₃)₂-C₆H₄)-I-C₆H₄-CH₃]⁺
- un photosensibilisateur (E) qui est un sel d'une thioxanthone substituée par au moins un groupement G comprenant une fonction ammonium : 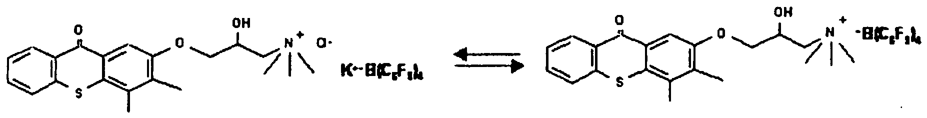 E étant éventuellement associé avec un photosensibilisateur à base de- 9,10-dibutoxyanthracène et de phénanthrènequinone ou de camphorquinone,
- un dispersant Dispersbyk 164®,
- et une charge e.g. quartz (granulométrie 1.5 µm, commercialisé par la société SCHOTT sous la référence G018-163 UF1.5 traité par 2% de glycidyltriméthoxysilane).

La demande PCT WO-A-2006/073021 divulgue une composition polymérisable/réticulable par voie cationique comprenant un monomère UVR6105, un photoamorceur [Cyracure® UVI6992 ou un hexafluorophosphate de iodonium (CGI552)] titrant 4,8 ou 2% en poids par rapport au monomère et un photosensibilisateur contenant un dialcoxyanthracène. Dans cette composition, le photoamorceur n'est pas un borate de iodonium. Cette demande PCT WO-A-2006/073021 sort donc du cadre de l'invention, qui s'intéresse plus spécialement à des compositions polymérisables/réticulables contenant des systèmes amorceurs à base de borates de iodonium, tels que [B(C₆F₅)₄]⁻ , [(CH(CH₃)₂-C₆H₄)-I-C₆H₄-CH₃]⁺.

Or, il se trouve que les photoamorceurs de type borate d'onium, s'ils sont particulièrement performants, ont pour léger inconvénient d'avoir une odeur caractéristique, dont on pourrait aisément s'affranchir dans certaines applications, comme par exemple les vernis alimentaires. Cette odeur est notamment liée à la décomposition du photoamorceur lors de la photopolymérisation.

Le facteur économique est un autre élément à prendre en compte à l'échelle industrielle, pour ces compositions polymérisables/réticulables à base de borates de iodonium. Sachant que les borates de iodonium ont un impact certain à cet égard, il serait intéressant de pouvoir diminuer la concentration de ces photoamorceurs à base de borates de iodonium dans les procédés utilisant les susdites compositions polymérisables /réticulables. Ceci aurait également pour corollaire d'atténuer l'odeur de ces compositions polymérisées/réticulées.

Dans ces circonstances, l'un des objectifs essentiels de la présente invention est de fournir un nouveau procédé de réalisation d'un film ou d'un revêtement dur, à partir de compositions polymérisables/réticulables dont les systèmes amorceurs sont à base de borates de iodonium et dont la concentration en système amorceur cationique soit réduite, sans perdre en efficacité, tout en étant faciles à manipuler et peu toxiques, et qui de ce fait, permettent d'obtenir des films, des revêtements (vernis, encres , revêtements anti-adhérents e.g. pour papier ou film polymère) et/ou matériaux composites ayant tout ou partie des propriétés suivantes :
⇒ les revêtements adhèrent bien sur leurs supports,
⇒ les vernis sont parfaitement imprimables
⇒ ils ne jaunissent pas au cours du temps et/ou après cuisson.

Un des objectifs à atteindre pour la présente invention est de fournir un nouveau procédé de réalisation d'un film ou d'un revêtement dur, à partir de compositions polymérisables/réticulables par voie cationique et, sous activation photonique et/ou thermique et/ou par faisceau d'électrons, dont les systèmes amorceurs sont à base de borates de iodonium et dont l'odeur (en particulier après polymérasation /réticulation) soit acceptable, tout en étant performantes vis-à-vis du plus grand nombre de monomères, oligomères et/ou polymères organofonctionnels polymérisables et/ou réticulables par voie cationique; les monomères, oligomères et/ou polymères étant notamment (1) de nature organique, de préférence uniquement hydrocarboné, ou (2) de nature polyorganosiloxane, éventuellement en mélange (3) avec d'autres monomères, oligomères et/ou polymères contenant des groupes acryliques.

Un autre objectif de l'invention est de fournir un nouveau procédé de réalisation d'un film ou d'un revêtement dur, à partir de compositions de ce type ayant des réactivités et des vitesses de polymérisation/réticulation aussi élevées que possible, notamment de manière à pouvoir augmenter les cadences d'enduction par exemple quand il s'agit de revêtements (vernis).

Un autre objectif de l'invention est de fournir un nouveau procédé de réalisation d'un film ou d'un revêtement dur, à partir de compositions de ce type utilisables aussi bien en couche mince, dont l'épaisseur se situe par exemple dans l'intervalle allant de 0,1 à 1 µm, qu'en couche plus épaisse, dont l'épaisseur se situe par exemple dans l'intervalle allant d'une valeur supérieure à un micromètre à plusieurs centimètres.

Un autre objectif de l'invention est de fournir un nouveau procédé de réalisation d'un film ou d'un revêtement dur, à partir de compositions de ce type pour la préparation de matériau composite.

Ces divers objectifs sont atteints par l'invention qui concerne tout d'abord, dans son premier objet, un nouveau procédé de réalisation d'un film ou d'un revêtement dur, à partir d'une composition polymérisable et/ou réticulable par voie cationique, caractérisé en ce qu'il comprend essentiellement les étapes consistant à :
a. mélanger :
   - au moins un monomère, oligomère et/ou polymère silicone réticulable et/ou polymérisable A porteur de groupements organofonctionnels comportant chacun au moins une fonction réactive choisie dans le groupe comprenant les fonctions suivantes : époxy, alcénylether, oxétanne , dioxolanne, carbonate, (met)acrylate et toutes leurs combinaisons, la fonction époxy étant préférée ;
   - une quantité efficace d'au moins un photoamorceur cationique B à base d'au moins un sel d'onium de formule **(I)** :

      [(R¹)ₙ-I- (R²)ₘ]⁺ (I)

      dans laquelle :
      - les radicaux R¹, identiques ou différents, représentent un radical aryle carbocyclique ou hétérocyclique en C₆-C₂₀, ledit radical hétérocyclique pouvant contenir comme hétéroéléments de l'azote et/ou du soufre ;
      - les radicaux R², identiques ou différents, répondent à la même définition que R¹ ou représentent un radical alkyle linéaire ou ramifié en C₁-C₃₀, ou un radical alkényle linéaire ou ramifié en C₁-C₃₀ ;
      - lesdits radicaux R¹ et R² étant éventuellement substitués par :
         - un groupement alkyle linéaire ou ramifié en C₁-C₃₀,
         - un groupement alcoxy OR¹²,
         - un groupement cétonique -(C=O)-R¹²
         - un groupement ester ou carboxylique -(C=O)-O-R¹²,
         - un groupement mercapto SR¹²,
         - un groupement mercapto SOR¹²,
            R¹² étant un radical choisi parmi le groupe constitué d'un atome d'hydrogène, un radical linéaire ou ramifié en C₁-C₂₅, un radical aryl en C₆-C₃₀, ou un radical alkylaryl dont la partie alkyle est linéaire ou ramifiée en C₁-C₂₅ et la partie aryle est en C₆-C₃₀,
         - un groupement nitro,
         - un atome de chlore,
         - un atome de brome,
         - et/ou un groupement cyano ;
      - n est un nombre entier allant de 1 à v+1, v étant la valence de l'iode ;
      - m est un nombre entier allant de 0 à v-1, avec n + m = v+ 1 ;et d'au moins une entité cationique de type borate d'onium de formule **(II)**:

         [BXₐR³_{b]}⁻ (II)

         dans laquelle :
         - a et b sont des nombres entiers tels que 0 ≤ a ≤ 4, 0 ≤ b ≤ 4, et a + b = 4 ;
         - les symboles X, identiques ou différents, représentent :
            - un atome d'halogène choisi parmi le chlore et/ou le fluor avec 0 ≤ a ≤ 3,
            - une fonction OH avec 0 ≤ a ≤ 2 ;
      - et les radicaux R³, identiques ou différents, représentent :
         - un radical phényle substitué par au moins un groupement électroattracteur tel que -CF₃, -OCF₃, -NO₂, -CN, -SO₂R³⁰, -O(C=O)-R³⁰, -O-CₙF₂ₙ₊₁, - CₙF₂ₙ₊₁, R³⁰ étant CₙF₂ₙ₊₁ avec n=1 à 20, ou substitué par au moins 2 atomes d'halogène, en particulier de fluor,
         - un radical aryle contenant au moins deux noyaux aromatiques tel que biphényle, naphtyle, éventuellement substitué par au moins un atome d'halogène, notamment un atome de fluor ou un groupement électroattracteur tel que -CF₃, -OCF₃, -NO₂, -CN, -SO₂R¹⁴, -O(C=O)-R¹⁴, R¹⁴ étant -O-CₙF₂ₙ₊₁, -CₙF₂ₙ₊₁, n étant un nombre entier compris entre 1 et 20 ;
   - une quantité efficace d'au moins un photosensibilisateur PSC choisi parmi les diéthers de formule **(III)** :
      → parmi les diéther- anthracènes de formule **(III.1)** :
      → et/ou parmi les diéther-naphtalènes de formule **(III.2)** : 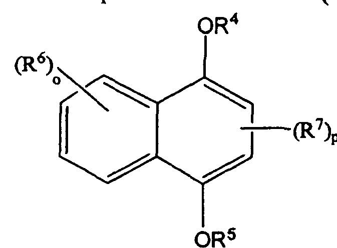
      → et/ou parmi les diéther-benzènes de formule **(III.3)** : 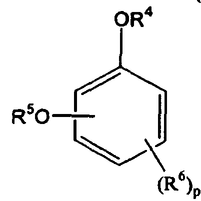
      dans lesquelles :
      - les groupements R⁴ et R⁵, identiques ou différents, représentent un radical alkyle linéaire ou ramifié en C₁-C₃₀, un radical alcényle linéaire ou ramifié en C₁-C₃₀, de préférence un allyle, un radical aryle en C₆-C₂₀, de préférence un benzyle, lesdits radicaux R⁴ et R⁵ étant éventuellement substitués par un groupement alcoxy OR⁴⁵, R⁴⁵ étant un radical choisi parmi le groupe constitué d'un atome d'hydrogène, un radical linéaire ou ramifié en C₁-C₂₅, un radical aryl en C₆-C₃₀, ou un radical alkylaryl dont la partie alkyle est linéaire ou ramifiée en C₁-C₂₅ et la partie aryle est en C₆-C₃₀,
      - et les groupements R⁶ et R⁷, identiques ou différents, représentent un radical non réactif à l'éthérification choisi parmi un radical alcényle linéaire ou ramifié en C₁-C₃₀, un radical alcoxy répondant à la même définition que celle donnée ci-avant pour OR⁴⁵, un radical amino, un radical alkylamino, un radical alkylsulfonyle, un radical alcoxycarbonyle ou un radical halogèno,
      - o et p sont des nombres entiers tels que 0 ≤ o ≤ 4, 0 ≤ p ≤ 4 ;
   - éventuellement une quantité efficace d'au moins un photosensibilisateur PSD choisi parmi les thioxanthones de formule (IV) : 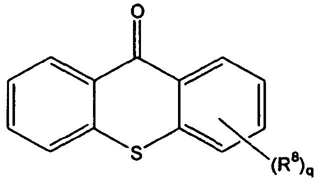 dans laquelle :
      les groupements R⁸, identiques ou différents, représentent un radical alkyle linéaire ou ramifié en C₁-C₁₂, un radical cycloalkyle linéaire ou ramifié en C₆-C₁₂, de préférence un allyle, un radical aryle en C₆-C₂₀, de préférence un benzyle, un radical amino, hydroxy, -CN, -NO₂, -halogèno, -COOR⁹, -CHO, -O-phényle,-SO₂-phényle, -O-alcényle ou -SiR⁹, avec R⁹ correspondant à un alkyle inférieur en C₁-C₁₂ ;
   - éventuellementau moins un agent de dissolution E de l'amorceur B et/ou de PSC et/ou de PSD ;
   - éventuellement au moins un solvant organique, de préférence alcoolique ;
b. appliquer le mélange obtenu sur un support ; et
c. faire durcir la composition par réticulation en un film ou revêtement dur par voie thermique ou actinique.

Il est du mérite des inventeurs d'avoir sélectionné cette classe spécifique de photosensibilisateurs PSC diéther-anthracènes et/ou diéther-naphtalènes et/ou diéther-benzènes, dans des compositions polymérisables et/ou réticulables par voie cationique, pour réduire la concentration en photoamorceurs borates de iodonium dans lesdites compositions, de sorte que l'odeur liée à ceux-ci avant et/ou polymérisation/réticulation soit acceptable.

Selon un mode très avantageux, le monomère, oligomère et/ou polymère réticulable et/ou polymérisable A, est de nature organique et/ou de nature polyorganosiloxanique.

Dans un mode préféré de réalisation, le monomère, oligomère et/ou polymère A est liquide à température ambiante ou thermofusible à température inférieure à 100°C, et, plus préférentiellement encore, de nature organique et porteur de groupements organofonctionnels appartenant à au moins l'une des espèces suivantes :
- α**_{1.1}** les époxydes cycloaliphatiques, pris à eux seuls ou en mélange entre eux,
- α**_{1.2}** les époxydes non cycloaliphatiques, pris à eux seuls ou en mélange entre eux,
- α**₂** les alcényl-éthers, linéaires ou cycliques, pris à eux seuls ou en mélange entre eux,
- α**₃** les polyols : pris à eux seuls ou en mélange entre eux.

Dans le détail, cela signifie que le monomère, oligomère et/ou polymère A appartient à au moins l'une des espèces organiques suivantes :
α**_{1.1}** époxydes cycloaliphatiques, pris à eux seuls ou en mélange entre eux :
   - les époxydes du type 3,4-époxycyclohexylméthyl-3',4'-époxycyclo-hexane carboxylate : 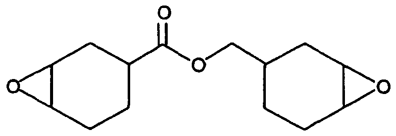
   - ou Bis(3,4-époxycyclohéxyl)adipate, étant particulièrement préférés ;
α**_{1.2}** époxydes non cycloaliphatiques, pris à eux seuls ou en mélange entre eux :
   - les époxydes du type de ceux résultant de la condensation de Bisphénol A et d'épichlorhydrine et du type :
      - di et triglycidyléthers de Bisphénol A alcoxylé de 1,6 hexanediol, de glycérol, de néopentylglycol et de propane triméthylol,
      - ou diglycidyléthers de Bisphénol A,
   - les époxydes d'alpha-oléfines, époxyde NOVOLAC, huile de soja et de lin époxydée, polybutadiène époxydé, et plus généralement un polymère diénique époxydé et monohydroxylé, saturé ou insaturé, décrit dans la demande de brevet WO-A-96/11215 obtenu par époxydation d'un polymère diénique de base de formule :

      (HO)x-J-Lz-K-(OH)y

      ou

      (HO)x-J-K-L-(OH)y

      dans laquelle :
      - les symboles J et K représentent des séquences ou blocs consistant dans : des homopolymères obtenus par polymérisation d'un monomère diène conjugué ayant de 4 à 24 atomes de carbone (comme par exemple : le butadiène-1,3, l'isoprène ou méthyl-2 butadiène-1,3, le phényl-2 butadiène-1,3, le pentadiène-1,3, le diméthyl-3,4 hexadiène-1,3, le diéthyl-4,5 octadiène-1,3) ; copolymères obtenus par copolymérisation d'au moins deux des diènes conjugués précités entre eux ; ou des copolymères obtenus par copolymérisation d'au moins un des diènes conjugués précités avec au moins un monomère insaturé éthyléniquement choisi parmi les monomères vinyles aromatiques ayant de 8 à 20 atomes de carbone (comme par exemple : le styrène, l'ortho-, méta- ou paraméthylstyrène, le vinyle mésitylène, le vinyle naphtalène),
      - le symbole L représente une séquence ou un bloc polymère obtenu à partir des monomères vinyles aromatiques précités,
      - x et y sont des nombres égaux à zéro ou 1, x étant égal à zéro quand y = 1 et x étant égal à 1 quand y = 0 ; et z est un nombre égal à zéro ou 1,
      ledit polymère diénique de base, d'une part avant époxydation, pouvant être partiellement saturé par hydrogénation, et d'autre part après époxydation, contenant de 0,1 à 7 milliéquivalents de fonction époxy par gramme de polymère diénique époxydé et monohydroxylé [comme exemple de polymères diéniques époxydés et monohydroxylés on citera les espèces obtenues par époxydation des polymères diéniques de base suivants : Is-Bu-OH, Is-St/Bu-OH, Is-EtBu-OH ou Is-St/EtBu-OH, où : le sybmole Is est un bloc polyisoprène, le symbole Bu est un bloc polybutadiène, le symbole EtBu est un bloc poly(éthylène-butylène) (issu de l'hydrogénation sélective d'un bloc polybutadiène), le symbole St est un bloc polystyrène (l'ensemble St/Bu représentant un bloc à base d'un copolymère statistique obtenu par copolymérisation de butadiène-1,3 et de styrène), et OH est un groupe hydroxyle (l'ensemble -EtBu-OH signifiant, par exemple, que le donneur de groupe hydroxyle est attaché au bloc polybutadiène hydrogéné)], étant particulièrement préférés ;
α₂ alcényl-éthers, linéaires ou cycliques, pris à eux seuls ou en mélange entre eux :
   - les vinyl-éthers, en particulier l'éther de triéthylène glycol divinylique, les éthers vinyliques cycliques ou les tétramères et/ou dimères d'acroléines, et le vinyl-éther de formule suivante : 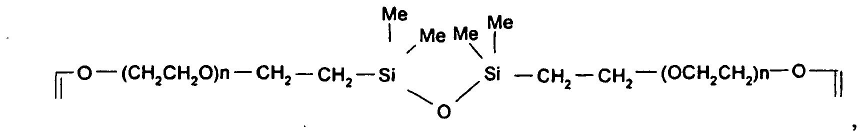
   - les propényl-éthers,
   - et les butényl-éthers étant, plus spécialement préférés ;
α**₃** les polyols : pris à eux seuls ou en mélange entre eux, et de préférence le composé de formule ci dessous, l étant supérieur à 1 et inférieur à 100 : 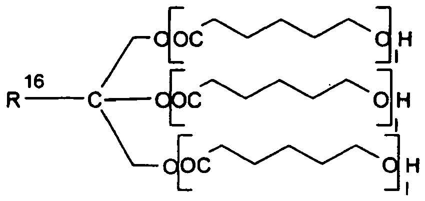
dans laquelle R¹⁶ est un radical alkyl linéaire ou ramifié en C₁-C₃₀.

Dans un autre mode de réalisation, le monomère, oligomère et/ou polymère A est liquide à température ambiante ou thermofusible à température inférieure à 100°C, et, plus préférentiellement encore, de nature polyorganosiloxanique, et constitué de motifs de formule **(VI)** et terminés par des motifs de formule **(VII)** ou cycliques constitués de motifs de formule **(VI)** représentées ci-dessous : 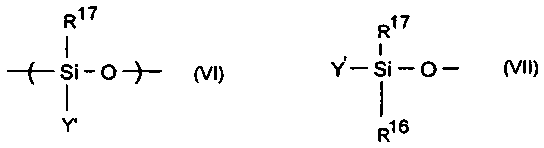 dans lesquelles :
- le symbole R¹⁶ est un radical alkyl linéaire ou ramifié en C₁-C₃₀ ;
- les symboles R¹⁷ sont semblables ou différents et représentent :
   - un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone pouvant être substitué, de préférence phényle ou dichlorophényle,
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone ;
- les symboles Y' sont semblables ou différents et représentent :
   - le groupement R¹⁷,
   - un radical hydrogène,
   - et/ou un groupement organofonctionnel réticulable par voie cationique, de préférence un groupement époxyfonctionnel et/ou vinyloxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
   - et l'un au moins des symboles Y' représentant un groupement organique fonctionnel réticulable par voie cationique, par exemple oxirane, alcénylether, oxétane, dioxolane et/ou carbonate.

Selon une variante avantageuse de l'invention, au moins un des symboles R¹⁷ des polyorganosiloxanes utilisés dans le cadre de l'invention en tant que monomère(s), oligomère(s) ou polymère(s) représente un radical phényle, tolyle ou dichlorophényle.

Selon une autre variante avantageuse de l'invention, les polyorganosiloxanes utilisés comportent de 1 à 10 groupements organofonctionnels par mole. Pour un groupement époxyfonctionnel cela correspond à des taux d'époxyde variant de 20 à 2000 meq. molaire/100 g de polyorganosiloxane.

Les polyorganosiloxanes linéaires peuvent être des huiles de viscosité dynamique à 25°C, de l'ordre de 10 à 10 000 mPa.s à 25°C, généralement de l'ordre de 50 à 5 000 mPa.s à 25°C et, plus préférentiellement encore, de 100 à 600 mPa.s à 25°C, ou des gommes présentant une masse moléculaire de l'ordre de 1 000 000 g.mol⁻¹.

Lorsqu'il s'agit de polyorganosiloxanes cycliques, ceux-ci sont constitués de motifs **(VII)** qui peuvent être, par exemple, du type dialkylsiloxy ou alkylarylsiloxy. Ces polyorganosiloxanes cycliques présentent une viscosité de l'ordre de 1 à 5 000 mPa.s à 25°C.

Comme exemples de radicaux divalents reliant un groupement organofonctionnel du type époxy, on peut citer ceux inclus dans les formules suivantes :

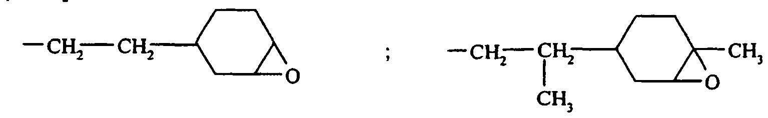

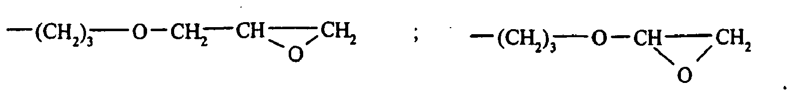

S'agissant des groupements organofonctionnels du type alkényléther, on peut mentionner ceux contenus dans les formules suivantes :

-(CH₂)₃-O-CH=CH₂ ; -(CH₂)₃-O-R¹⁸-O-CH=CH₂ ; -(CH₂)₃-O-CH=CH-R¹⁹

dans lesquelles :
- R¹⁸ représente :
   - un radical alkylène linéaire ou ramifié en C₁-C₁₂, éventuellement substitué,
   - ou un radical arylène en C₅-C₁₂, de préférence phénylène, éventuellement substitué, de préférence par un à trois groupements alkyles en C₁-C₆ ;
- R¹⁹ représente un radical alkyle linéaire ou ramifié en C₁-C₆.

Selon une disposition intéressante du procédé de l'invention, la composition polymérisable et/ou réticulable est à base de monomère(s) et/ou oligomère(s) et/ou polymère(s) A, de nature polyorganosiloxane et de nature organique, notamment hydrocarbonée.

Selon une autre disposition intéressante du procédé de l'invention, la composition polymérisable et/ou réticulable est à base de monomère(s) et/ou oligomère(s) et/ou polymère(s) A, de nature polyorganosiloxane et/ou de nature organique, notamment hydrocarbonée, et comprend en outre des monomères, oligomères et/ou polymères à groupements organofonctionnels d'espèce acrylate; et notamment acrylates époxydés, acrylo-glycéro-polyester, acrylates multifonctionnels, acrylo-uréthanes, acrylo-polyéthers, acrylo-polyesters, polyesters insaturés, acrylo-acryliques.

Ces espèces acryliques, éventuellement en mélange, utilisables avec des monomère(s) et/ou oligomère(s) et/ou polymère(s) de nature polyorganosiloxane et/ou de nature organique, sont choisies de préférence parmi les espèces suivantes : triacrylate de triméthylolpropane, diacrylate de tripropylèneglycol, glycidylpropyl triacrylate, pentaérythritol triacrylate, triméthylolpropane éthoxylatetriacrylate, Bisphénol-A éthoxylate diacrylate, tripropylèneglycol diacrylate, triéthylèneglycol diacrylate, tetraéthylèneglycoldiacrylate, polyethers acrylates, polyesters acrylates (par exemple le produit Ebecryl® 810 de la société UCB-Radcure), et époxy acrylates (par exemple le produit Ebecryl® 600 de la société UCB-Radcure).

Il est rappelé que, dans le présent mémoire, l'expression "acrylique" englobe des composés comprenant la fonction de type CH₂=CH-COO- ou de type CH₂=C(CH₃)-COO.

Le monomère, oligomère et/ou polymère A est par exemple choisi dans le groupe comprenant :

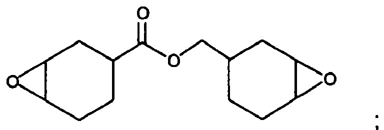

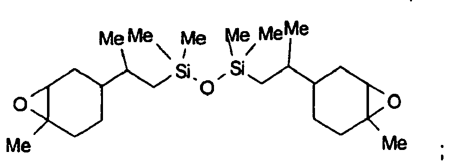

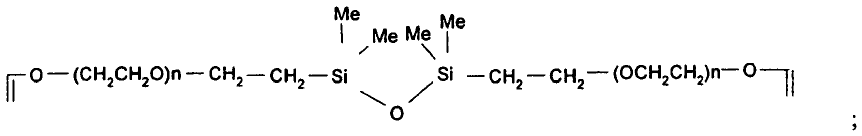

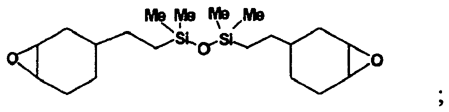

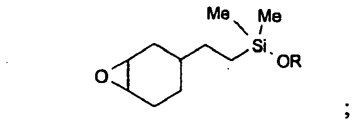

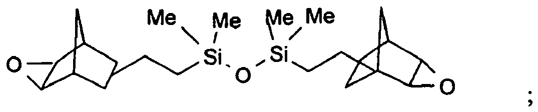

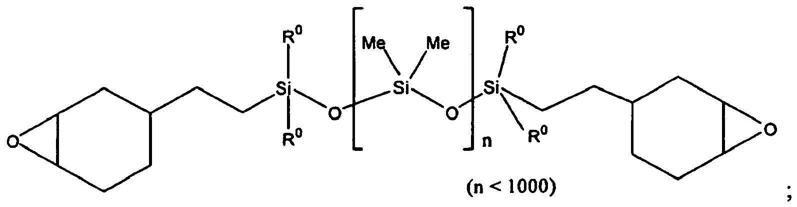

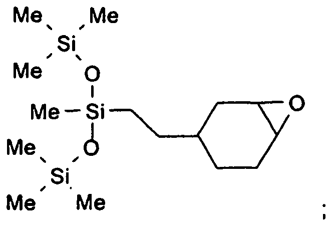

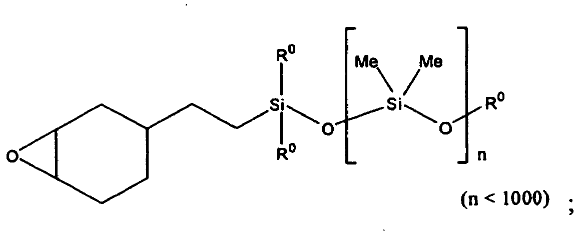

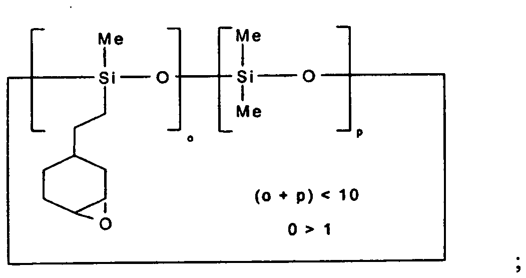

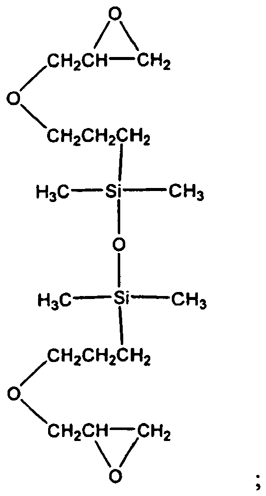

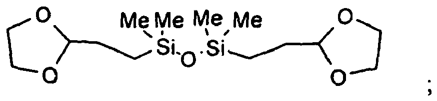

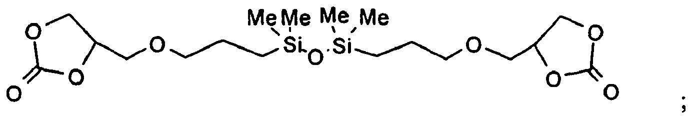

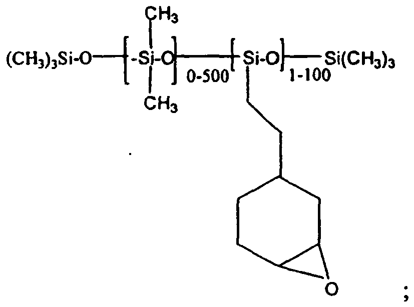

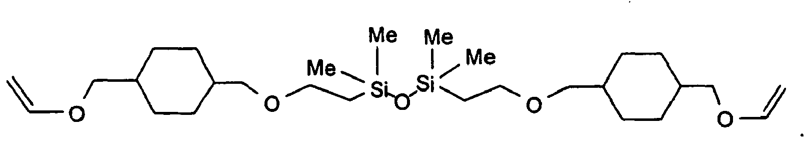

Selon une variante, le monomère, oligomère et/ou polymère A est porteur d'au moins un groupement fonctionnel choisi par exemple dans le groupe comprenant :

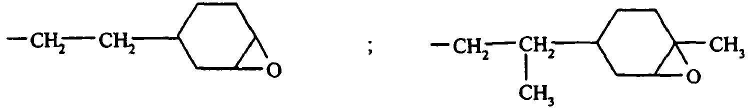

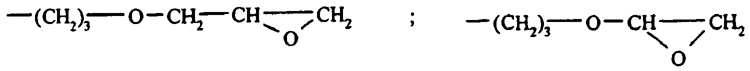

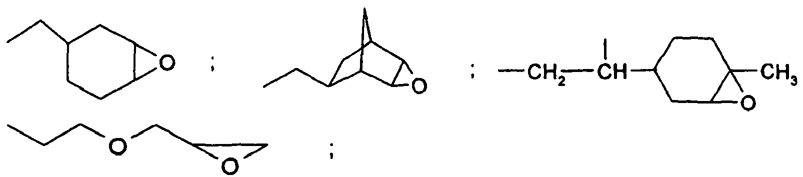

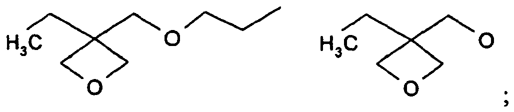

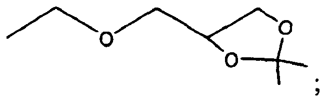

-(CH₂)₃-O-CH=CH₂ ; -(CH₂)₃-O-R¹⁸-O-CH=CH₂ ; -(CH₂)₃-O-CH-CH-R¹⁹

dans lesquelles :
- R¹⁸ représente :
   - un radical alkylène linéaire ou ramifié en C₁-C₁₂, éventuellement substitué,
   - ou un radical arylène en C₅-C₁₂, de préférence phénylène, éventuellement substitué, de préférence par un à trois groupements alkyles en C₁-C₆;
- R¹⁹ représente un radical alkyle linéaire ou ramifié en C₁-C₆,

Avantageusement, le photoamorceur B est choisi dans le groupe constitué par les borates de iodonium :
→ dont l'entité anionique est choisie parmi le groupe constitué de [B(C₆F₅)₄]⁻, [B(C₆H₃(CF₃)₂)₄]⁻, [B(C₆H₄OCF₃)₄]⁻, [B(C₆H₄CF₃)₄]⁻, [(C₆F₅)₂BF₂]⁻, [C₆F₅BF₃]⁻, [B(C₆H₃F₂)₄]⁻, et leur mélanges;
   de préférence dans le sous-groupe constitué de B(C₆F₅)₄⁻, [B(C₆H₃(CF₃)₂)₄]⁻, [B(C₆H₄OCF₃)₄]⁻ et leur mélanges;
→ et dont l'entité cationique du borate de iodonium est choisie parmi le groupe constitué de :

   [(C₆H₅)₂I]⁺,

   [C₈H₁₇-O-C₆H₄-I-C₆H₅]⁺,

   [C₁₂H₂₅-C₆H₄-I-C₆H₅]⁺,

   [(C₈H₁₇O-C₆H₄)₂I]⁺,

   [(C₈H₁₇)-O-C₆H₄-I-C₆H₅)]⁺,

   [(C₁₂H₂₅-C₆H₄)₂I]⁺,

   [(CH(CH₃)₂-C₆H₄)-I-C₆H₄-CH₃]⁺,

   [C₆H₅-O-C₆H₄-I-C₆H₅]⁺,

   [C₆H₅-(C=O)-C₆H₄-I-C₆H₅]⁺,

   [C₆H₅-O-C₆H₄-I-C₆H₄-O-C₆H₅]⁺,

   [C₆H₅-(C=O)-C₆H₄-I-C₆H₄-(C=O)-C₆H₅]⁺,

   [C₆H₅-I-C₆H₄-O-CH₂-O-C(OH)-C₁₂H₂₅]⁺,
et leurs mélanges.

Par quantité catalytique efficace d'amorceur, on entend selon l'invention la quantité suffisante pour amorcer la polymérisation et/ou la réticulation. Cette quantité est généralement comprise entre 0,01 et 20 parties en poids, le plus souvent entre 0,05 et 8 parties en poids pour polymériser et/ou réticuler 100 parties en poids du composant A (matrice).

Les borates de iodonium B faisant l'objet de la présente invention peuvent être préparés par réaction d'échange entre un sel de l'entité cationique (halogénure tel que par exemple chlorure, iodure) avec un sel de métal alcalin de l'entité anionique (sodium, lithium, potassium).

Les conditions opératoires (quantités respectives de réactifs, choix des solvants, durée, température, agitation) sont à la portée de l'homme de l'art ; celles-ci doivent permettre de récupérer le borate d'onium recherché sous forme solide par filtration du précipité formé ou sous forme huileuse par extraction à l'aide d'un solvant approprié. Les modes opératoires de synthèse des iodures des entités cationiques sus-visées, sont connus en soi. A ce sujet, on se reportera notamment au brevet EP-0 562 897. Les modes opératoires de synthèse des sels de métal alcalin de l'entité anionique borate, sont également connus en soi ; notamment par exemple, dans le brevet EP-0 562 897.

Le photosensibilisateur PSC peut être choisi :
→ parmi les diéther-anthracènes de formule **(III.1),** et plus préférentiellement encore parmi celles de formules suivantes : 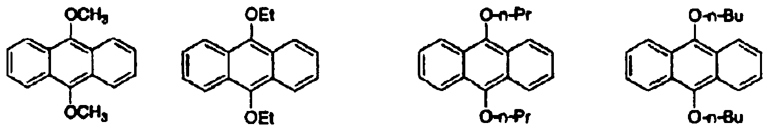 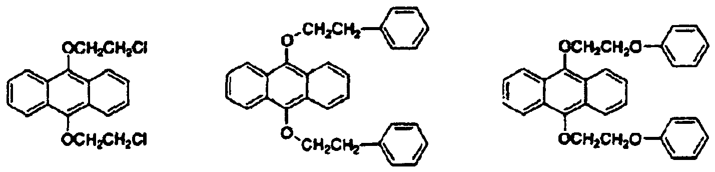 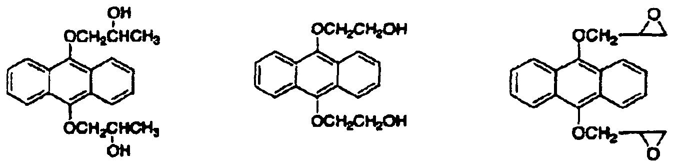 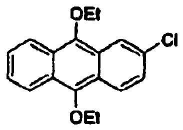 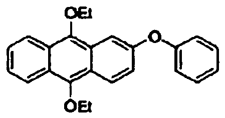
→ et/ou parmi les diéther-naphtalènes de formule **(III.2),** et plus préférentiellement encore parmi celles de formules suivantes : 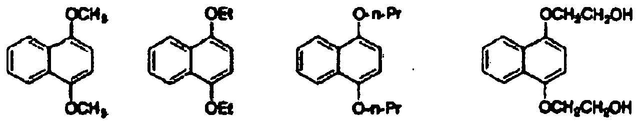 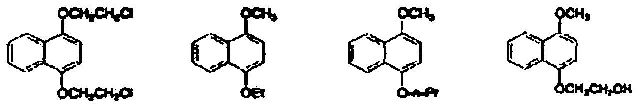 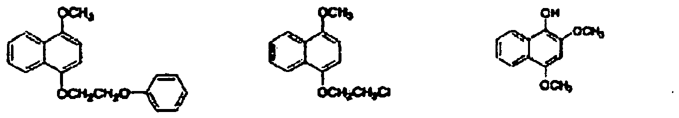 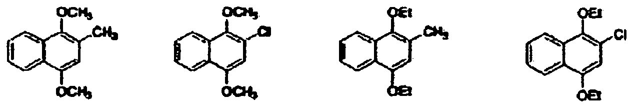 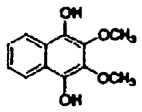
→ et/ou parmi les diéther-benzènes de formule **(III.3),** et plus préférentiellement encore celui de formule suivante :

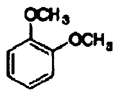

**Ces** diéther-anthracènes, naphtalènes ou benzènes PSC de formule **(III.1) (III.2) (III.3)** sont décrits notamment dans le WO-A-2006/073021.

Par quantité catalytique efficace de photoinitiateur C, on entend selon l'invention la quantité suffisante pour compenser la diminution de la quantité de B, c'est-à-dire que la polymérisation et/ou la réticulation se fasse dans des conditions de temps et de qualité équivalentes à celles d'une composition connue de l'art antérieur. Cette quantité de PSC est généralement comprise entre 0,01 et 5 parties en poids, le plus souvent entre 0,01 et 0,5 parties en poids pour polymériser et/ou réticuler 100 parties en poids du composant A (matrice), la quantité de B étant réduite de 5 à 40%, de préférence 15 à 35 %, et plus préférentiellement de 25% par rapport à sa quantité nécessaire en l'absence de PSC, soit une quantité de B généralement comprise entre 0,01 et 20 parties en poids, le plus souvent entre 0,05 et 8 parties en poids.

Outre les photosensibilisateurs PSC et PSD, la composition peut comprendre au moins un autre photosensibilisateur PSD' hydrocarboné aromatique à un ou plusieurs noyaux aromatiques substitués ou non, ayant une absorption résiduelle de la lumière comprise entre 200 et 500 nm. Ce photosensibilisateur PSD' peut être de nature très variée. Celui-ci peut répondre notamment à l'une des formules **(IV)** à **(XI)** et **(XIII)** à **(XXII)** décrites pages 8 à 15 du WO-A-00/19966 ou bien encore à au moins l'une des benzophénones décrites page 4 ligne 33 à page 7 ligne 12, et page 8 ligne 9 ligne 13 du WO-A-99/05181.

A titre d'exemples d'agent E facultatif de dissolution de l'amorceur B et/ou de PSC et/ou de PSD, on peut citer ceux choisis dans le groupe comprenant : les oxétanes , les vinyl- éthers et leurs mélanges.

A titre d'exemples de solvant F organique, de préférence alcoolique, facultatif, on peut citer ceux choisis dans le groupe comprenant : l'alcool isopropylique, 4-hydroxy-4-méthyl-2-pentanone-diacetone, lactate de butyle et leurs mélanges.

Les concentrations en PSC et en B rendent compte des avantages significatifs de l'invention en termes d'atténuation d'odeur du photoamorceur borate de iodonium après photodécomposition et en termes de réduction de la concentration en photoamorceur borate de iodonium. Ainsi, en % en poids :
→ A ≥ 50
→ B ≤ 5
→ 0,01 ≤ C ≤ 5,
   de préférence 0,01 ≤ C ≤ 0,5,
   et plus préférenciellement 0,01 ≤ C ≤ 0,1
→ 0 ≤ D ≤ 50
→ 0 ≤ E ≤ 50
→ 0 ≤ F ≤ 50.

De préférence, les concentrations sont les suivantes, en % en poids :
→ A ≥ 50
→ B ≤ 5
→ 0,01 ≤ C < 0,1
→ 0 ≤ D ≤ 50
→ 0 ≤ E ≤ 50
→ 0 ≤ F ≤ 50.

Dans le cas où A est de nature organique, les concentrations peuvent être avantageusement les suivantes, en % en poids :
→ A ≥ 70
→ B ≤ 4
→ 0,01 ≤ C ≤ 5
   de préférence 0,01 ≤ C ≤ 0,5,
   et plus préférenciellement 0,01 ≤ C ≤ 0,1
→ 0 ≤ D ≤ 2
→ 0 ≤ E ≤ 20
→ 0 ≤ F ≤ 10.

De préférence, dans le cas où A est est de nature organique, les concentrations sont les suivantes, en % en poids :
→ A ≥ 70
→ B ≤ 4
→ 0,01 ≤ C < 0,1
→ 0 ≤ D ≤ 2
→ 0 ≤ E ≤ 20
→ 0 ≤ F ≤ 10.

Dans le cas où A est est de nature polyorganosiloxanique, les concentrations peuvent être avantageusement les suivantes, en % en poids :
→ A ≥ 80
→ B ≤ 1
→ 0,01 ≤ C ≤ 0,5
   de préférence 0,01 ≤ C ≤ 0,2,
   et plus préférenciellement 0,01 ≤ C ≤ 0,1
→ 0 ≤ D ≤ 1
→ 0 ≤ E ≤ 10
→ 0 ≤ F ≤ 10.

De préférence, dans le cas où A est est de nature polyorganosiloxanique, les concentrations sont les suivantes, en % en poids :
→ A ≥ 80
→ B ≤ 1
→ 0,01 ≤ C < 0,1
→ 0 ≤ D ≤ 1
→ 0 ≤ E ≤ 10
→ 0 ≤ F ≤ 10.

Les compositions selon l'invention comportent éventuellement un accélérateur de polymérisation et/ou réticulation, et éventuellement encore un ou plusieurs additifs choisis parmi ceux généralement connus dans les applications auxquelles sont destinées ces compositions.

Quand la composition polymérisable et/ou réticulable est à base d'au moins l'une des espèces organiques α**_{1.1}** à α**₃,** en mélange éventuellement avec des monomères, oligomères et/ou polymères de nature acrylique, les additifs peuvent être notamment des composés éventuellement sous forme de polymères, à hydrogènes mobiles comme des alcools, des glycols et des polyols, utiles pour améliorer la flexibilité du matériau durci après polymérisation et/ou réticulation ; on peut citer par exemple les polycaprolactones-polyols, en particulier le polymère obtenu au départ de 2-éthyl-2-(hydroxyméthyl)-1,3-propane-diol et de 2-oxépanone tel que le produit TON POLYOL®-301 commercialisé par la Société UNION CARBIDE, ou les autres polymères commerciaux TONE POLYOL® 201 et TONE POLYOL® 12703 de la société UNION CARBIDE. En outre, dans ce cas, on peut citer comme additifs, les diacides à longue chaîne alkyle, les esters gras d'acides insaturés époxydés ou non, par exemple l'huile de soja époxydée ou l'huile de lin époxydée, le 2-éthylhexylester époxydé, le 2-éthylhexyl époxy stéarate, l'époxystéarate d'octyle, les esters acryliques époxydés, les acrylates d'huile de soja époxydés, les acrylates d'huile de lin époxydés, l'éther diglycidique de glycolpolypropylène, les époxydes aliphatiques à longue chaîne, etc.

Ces additifs supplémentaires peuvent être encore, quelle que soit la nature de la matrice polymérisable, par exemple : de charges minérales telles que notamment des fibres synthétiques (polymères) ou naturelles broyées, du carbonate de calcium, du talc, de l'argile, du dioxyde de titane, de la silice de précipitation ou de combustion ; de colorants solubles ; d'inhibiteurs d'oxydation et de corrosion ; de modulateur d'adhérence organosiliciques ou non ; d'agents fongicides, bactéricides, anti-microbiens ; et/ou de tout autre matériau n'interférant pas avec l'activité catalytique de l'amorceur et n'absorbant pas dans la gamme de longueur d'onde choisie pour la photoactivation.

Selon un autre de ses aspects, la présente invention concerne un film ou revêtement dur obtenu par le procédé défini supra.

Avantageusement, ce revêtement est un vernis, un revêtement adhésif, un revêtement anti-adhérent et/ou une encre.

Selon encore un autre de ses aspects, la présente invention vise un matériau composite susceptible d'être obtenu à partir d'un film ou revêtement dur obtenu par le procédé ci-dessus décrit.

Selon encore un autre de ses aspects, la présente invention couvre également un objet dont une surface au moins est revêtue du film ou revêtement obtenu par le procédé susdécrit, par un matériau composite défini précédemment.

L'invention a également pour objet l'utilisation d'une quantité efficace d'au moins un photosensibilisateur PSC choisi parmi les diéthers de formule **(III)** tels que définis supra dans une composition polymérisable et/ou réticulable par voie cationique, sous activation thermique et/ou actinique et/ou par faisceau d'électrons (de préférence actinique) comprenant au moins un monomère, oligomère et/ou polymère A tel que défini supra, au moins un photoamorceur B tel que défini supra, éventuellement une quantité efficace d'au moins un photosensibilisateur PSD tel que défini supra ou choisi parmi les sels de thioxanthone substituée par au moins un groupement G comprenant une fonction ammonium et ayant pour formule **(V)** : 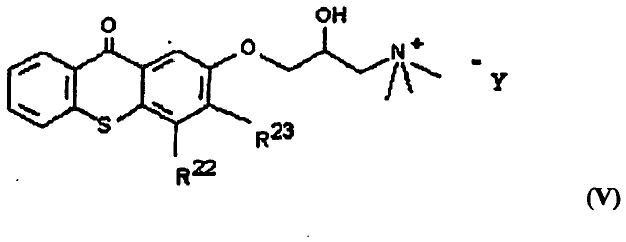 dans laquelle :
- R²² et R²³ sont identiques ou différents et représentent un hydrogène ou un radical alkyle en C₁-C₁₀, éventuellement substitué, de préférence R²² = R²³ = méthyle ;
- (Y⁻) étant une entité anionique choisie parmi le groupe constitué par : BF4⁻, PF6⁻, SbF6⁻ ; l'anion **(II)** de formule [BXₐR³_{b}]⁻ défini ci-dessous, RfSO₃⁻ ; (RfSO₂)₃C⁻ ou (RfSO₂)₂N⁻, avec Rf étant un radical alkyle linéaire ou ramifié, substitué par au moins un atome d'halogène, préférentiellement un atome de fluor, et encore plus préférentiellement (Y⁻) est choisi parmi les borates de formules suivantes : [B(C₆F₅)₄]⁻ et [B(C₆H₃(CF₃)₂)₄]⁻ ;
éventuellement au moins un agent de dissolution E de l'amorceur B et/ou de PSC et/ou de PSD tel que défini supra et éventuellement (au moins un solvant organique F tel que défini ci-dessus;
pour réduire la quantité du photoamorceur B dans ladite composition.
Cette réduction de la quantité du photoamorceur B, par l'utilisation du photosensibilisateur PSC ci-dessus défini, permet de lutter contre l'odeur désagréable de ladite composition avant et/ou après la polymérisation/réticulation.

Les exemples suivants sont donnés à titre illustratif. Ils permettront notamment de mieux comprendre l'invention et de faire ressortir tous ses avantages et entrevoir quelques unes de ses variantes de réalisation.

### EXEMPLES :

Les films et revêtements durs concernées sont les encres et vernis organiques.

### A. Les monomères utilisés sont des monomères photopolymérisables par voie cationique.

Pour ces exemples, les essais sont réalisés avec le 3,4 epoxy cyclohexylmethyl-3,4-epoxycyclohexylcarboxylate [RN-CAS = 2386-87-0]. Plus particulièrement un échantillon commercial de chez Dow Chemical, le UVR-6105 est utilisé :

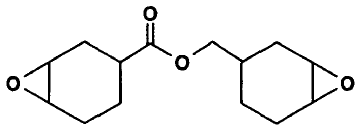

### B. Le photoiniateur utilisé dans ces exemples est le tolylcumyliodonium borate [RN-CAS = 178233-72-2] correspondant à la formule :

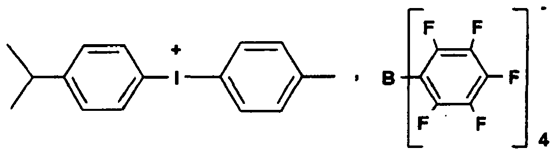

Pour ces exemples, il est désigné par B.

### C. Le photosensibilisateur PSC utilisé dans cette étude est le 9,10-dibutoxyanthracène [RN-CAS=76275-14-4] de formule chimique :

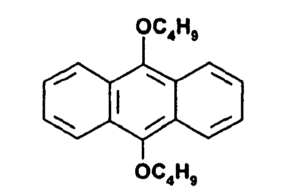

Pour ces exemples, il est désigné PSC ou DBA.

### PARTIE EXPERIMENTALE

### Formulations :

La formulation de référence correspond à un mélange contenant:
○ 1 partie de CPTX
○ 2 parties de B
○ 8 parties de TMPO
○ 39 parties de A = UVR 6105

Le CPTX est un photosensibilisateur PSD de la famille des thioxanthones : le 1-chloro 4-propoxythioxanthone [RN-CAS = 142770-42-1] qui est particulièrement efficace avec B. La formule chimique du CPTX est la suivante :

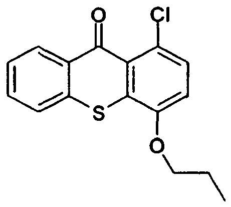

Le TMPO est un agent de dissolution E constitué par un oxétane utilisé pour faciliter la dissolution du PI et des photosensibilisateurs dans le monomère A = UVR 6105 et qui permet également d'augmenter la réactivité. La formule du TMPO est la suivante :

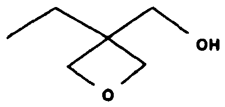

Les exemples qui suivent portent du taux de B, d'une part, et sur l'impact de l'ajout de la PSC = DBA, d'autre part. Des formulations contenant de 2, 1,75 et 1,5 parties de B sont préparées et testées. Afin d'étudier l'impact de l'ajout de la DBA, des formulations ont été préparées en ajoutant aux formulations précédentes de 100 à 1000 ppm de DBA.

### Dissolution

La dissolution s'effectue en introduisant d'abord le TMPO, CPTX, PI et DBA puis l'UVR6105. Le mélange est placé sur les rouleaux pour une durée d'une heure environ. La formulation est alors prête à être testée.

### Enduction

Les enductions sont réalisées sur des plaques en aluminium. Le tirage est fait manuellement à l'aide d'une barre de Meyer 0. L'épaisseur des couches obtenues est de quelques microns.

### Réticulation

Les plaques ainsi enduites sont réticulées dans le banc UV IST. Les conditions de réticulation sont données ci-dessous :
1 Lampe Hg - 100W/cm,
Vitesse 100m/min ou 50m/min,
1 seul passage.

### Tests

A la sortie du banc UV, la réticulation est vérifiée via l'aspect sec au toucher.

24 heures après la sortie du banc UV, les différentes enductions sont testées à la résistance à la MEK (en anglais « methyl ethyl ketone », ce qui correspond en français à l'éthyl méthyl cétone de numéro CAS No.: 78-93-3)

Le test de résistance à la MEK consiste à imbiber un morceau d'ouate d'éthyl méthyl cétone puis d'effectuer des aller-retour sur la partie enduite jusqu'à destruction partielle du film. Le nombre d'aller-retour avant destruction correspond à la résistance à la MEK. Sur chaque plaque, une enduction témoin est réalisée et testée. Dans notre étude cette enduction témoin est basée sur la formulation de référence ci-dessous décrite. La résistance à la MEK n'est pas une valeur absolue mais toujours une comparaison par rapport à ce témoin.

### Référence

La formulation de référence est enduite en parallèle de chaque formulation testée ci-dessous pour évaluer les variations.

| | Formulation de Référence |
|---|---|
| PSD : CPTX (parties) | 1 |
| B (parties) | 2 |
| E : TMPO (parties) | 8 |
| A : UVR6105 (parties) | 39 |
| PSC : DBA | 0 |
| (parties/ppm/%poids) | |

### Formulations I et II :

Les deux formulations suivantes ont été testées pour démontrer l'impact de la diminution du taux de B :

| | | | | | | | |
|---|---|---|---|---|---|---|---|
| Formulations | | I | | | II | | |
| PSD : CPTX (parties) | | 1 | | | 1 | | |
| B (parties) | | **1,75** | | | **1,50** | | |
| E : TMPO (parties) | | 8 | | | 8 | | |
| A : UVR6105 (parties) | | 39 | | | 39 | | |
| PSC : DBA (parties/ppm/%poids) | | 0 | | | 0 | | |

| **Formulations** | **B (parties)** | **PSC :DBA (ppm)** | **Vitesse** | **Lampes** | **Puissance** | **Sec** | **MEK** |
|---|---|---|---|---|---|---|---|
| **N°** | | | m/min | | W/cm | | |
| **Référence** | 2 | 0 | 100 | 1 | 100 | oui | 80 |
| **Référence** | 2 | 0 | 50 | 1 | 100 | oui | 100 |
| **I** | 1.75 | 0 | 100 | 1 | 100 | oui | 80 |
| **I** | 1.75 | 0 | 50 | 1 | 100 | oui | 100 |
| **II** | 1.50 | 0 | 100 | 1 | 100 | oui | 70 |
| **II** | 1.50 | 0 | 50 | 1 | 100 | oui | 80 |

Une perte de résistance à la MEK est observée lorsque le taux de B présent dans la formulation est diminué de 25% (Formulation II).

### Exemples 1, 2 et 3

L'impact de l'ajout de DBA est étudié en préparant les formulations des exemples 1, 2 et 3.

| | | Exemple 1 | | Exemple 2 | | Exemple 3 | |
|---|---|---|---|---|---|---|---|
| PSD:CPTX (parties) | | 1 | | 1 | | 1 | |
| B (parties) | | 2 | | 2 | | 2 | |
| E: TMPO (parties) | | 8 | | 8 | | 8 | |
| A:UVR6105(parties) | | 38,99 | | 38,98 | | 38,95 | |
| PSC : DBA (parties) | | **0,01** | | **0,02** | | **0,05** | |
| PSC : DBA (ppm) | | **200** | | **400** | | **1000** | |
| PSC : DBA (%poids) | | **0,02** | | **0,04** | | **0,10** | |

| **Formulations** | **B (parties)** | **PSC :DBA (ppm)** | **Vitesse** | **Lampes** | **Puissance** | **Sec** | **MEK** |
|---|---|---|---|---|---|---|---|
| **N°** | | | m/min | | W/cm | | |
| **Référence** | 2 | 0 | 100 | 1 | 100 | oui | 80 |
| **1** | 2 | 200 | 100 | 1 | 100 | oui | **90** |
| **2** | 2 | 400 | 100 | 1 | 100 | oui | **80** |
| **3** | 2 | 1000 | 100 | 1 | 100 | oui | **80** |

L'ajout de très faible quantité de PSC : DBA (200 ppm, soit 0,02% en poids) permet une augmentation de la résistance à la MEK. Pour des ajouts de 400 et 1000 ppm de PSC : DBA (respectivement 0,04 et 0,10% poids), aucun impact n'est observé sur la résistance à la MEK.

### Exemples 4, 5 et 6

Dans cette dernière série d'exemples, est étudié l'impact de l'ajout de la DBA sur des formulations dont le taux de B a été diminué.

| | Exemple 4 | | | Exemple 5 | | Exemple 6 | |
|---|---|---|---|---|---|---|---|
| PSD:CPTX (parties) | 1 | | | 1 | | 1 | |
| B (parties) | **1,75** | | | **1,5** | | **1,75** | |
| E : TMPO (parties) | 8 | | | 8 | | 8 | |
| A : UVR6105 (parties) | 38,99 | | | 38,99 | | 38,995 | |
| PSC : DBA (parties) | **0,01** | | | **0,01** | | **0,005** | |
| PSC : DBA (ppm) | **200** | | | **200** | | **100** | |
| PSC : DBA (%poids) | **0,0201** | | | **0,0202** | | **0,0101** | |

| **Formulations** | **B (parties)** | **PSC :DBA (ppm)** | **Vitesse** | **Lampes** | **Puissance** | **Sec** | **MEK** |
|---|---|---|---|---|---|---|---|
| **N°** | | | m/min | | W/cm | | |
| **Référence** | 2 | 0 | 100 | 1 | 100 | oui | 80 |
| **Référence** | 2 | 0 | 50 | 1 | 100 | oui | 100 |
| **4** | 1,75 | 200 | 100 | 1 | 100 | oui | **90** |
| **4** | 1,75 | 200 | 50 | 1 | 100 | oui | **100** |
| **5** | 1,50 | 200 | 100 | 1 | 100 | oui | **90** |
| **5** | 1,50 | 200 | 50 | 1 | 100 | oui | **100** |
| **6** | 1,75 | 100 | 100 | 1 | 100 | oui | **90** |
| **6** | 1,75 | 100 | 50 | 1 | 100 | oui | **100** |

L'ajout de PSC : DBA permet d'améliorer les propriétés de résistance à la MEK alors que le taux de photoamorceur est diminué. En ajoutant 200 ppm de PSC : DBA (soit 0,02 %poids), on peut diminuer le taux de B de 25% tout en améliorant la résistance à la MEK.

### Exemples 7 à 12

### A : Silicone Epoxy type

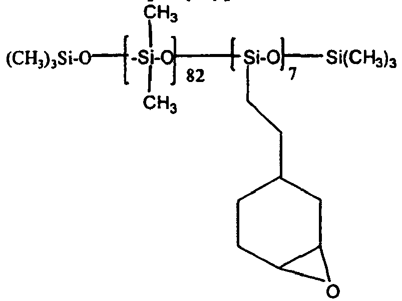

B : [B(C₆F₅)₄]⁻ , [(CH(CH₃)₂-C₆H₄)-I-C₆H₄-CH₃]⁺

PSC : DBA
Solvant E : alcool isopropylique , 4-hydroxy-4-Methyl-2-Pentanone, diacetone[CAS = 123-42-2], Lactate de Butyle [CAS = 34451-19-9]

Les formulations de référence Ref1, Ref2 et Ref3 contiennent :
100 parties de Silicone Epoxy A tel que défini ci-dessus.
0,5 parties de B tel que défini ci-dessus.
2 parties de E choisi parmi les composés définis ci-dessus.

Les exemples 7 à 12 qui suivent portent sur l'impact de l'ajout de la PSC : DBA sur la cinétique de réticulation du Silicone Epoxy A.

Les applications concernées par ces exemples sont notamment les revêtements anti-adhérents à base de silicone réticulé.

La dissolution s'effectue en introduisant d'abord le B et le solvant E puis le Silicone Epoxy A. Le mélange est placé sur les rouleaux pour une durée de une heure environ. La formulation est alors prête à être testée.

La PSC : DBA est ajoutée de préférence avant le Silicone Epoxy A.

Le test correspond à une mesure de temps de gel sous UV.

| | Ref1 | Ex 7 | Ex 8 | Ref2 | Ex 9 | Ex 10 | Ref3 | Ex 11 | Ex 12 |
|---|---|---|---|---|---|---|---|---|---|
| A : Silicone Epoxy | 100 | 100 | 100 | 100 | 100 | 100 | 100 | 100 | 100 |
| B | 0,5 | 0,5 | 0,5 | 0,5 | 0,5 | 0,5 | 0,5 | 0,5 | 0,5 |
| E:IPA | 2 | 2 | 2 | | | | | | |
| E : Lactate de Butvl | | | | 2 | 2 | 2 | | | |
| E : Diacetone Alcool | | | | | | | 2 | 2 | 2 |
| PSC : DBA (ppm) | 0 | 250 | 1000 | 0 | 250 | 1000 | 0 | 250 | 1000 |
| PSC : DBA (%poids) | 0 | **0,0250** | **0,1025** | 0 | **0,0250** | **0,1025** | 0 | **0,0250** | **0,1025** |
| Temps Gel (min) | 1 | **0,4** | **1,3** | 0,4 | **0,1** | **0,3** | >2 | **0,1** | **>2** |

Quelque soit le solvant employé, pour des quantités faibles de B (0,5 parties) l'ajout de 250 ppm de PSC : DBA (soit 0,025% en poids) permet d'accélérer de manière significative la cinétique de réticulation du silicone epoxy A. Ce test montre aussi que l'on peut diminuer la quantité de B tout en conservant des réactivités et des vitesses de polymérisation/réticulation aussi élevées que les références, et même meilleures dans certaines conditions de concentrations de PSC : DBA. On voit que la compensation de la diminution de la quantité de photoamorceur B par du PSC : DBA n'affecte pas (et améliore pour certains cas) les caractéristiques essentielles de polymérisation de la composition.

## Revendications

1. Procédé de réalisation d'un film ou d'un revêtement dur, à partir d'une composition polymérisable et/ou réticulable par voie cationique, **caractérisé en ce qu'**il comprend essentiellement les étapes consistant à :
a. mélanger :
- au moins un monomère, oligomère et/ou polymère silicone réticulable et/ou polymérisable A porteur de groupements organofonctionnels comportant chacun au moins une fonction réactive choisie dans le groupe comprenant les fonctions suivantes : époxy, alcénylether, oxétanne , dioxolanne, carbonate, (met)acrylate et toutes leurs combinaisons, la fonction époxy étant préférée ;
- une quantité efficace d'au moins un photoamorceur B cationique à base d'au moins un sel d'onium de formule **(I)** :
[(R¹)ₙ-I-(R²)ₘ]⁺ (I)
dans laquelle :
• les radicaux R¹, identiques ou différents, représentent un radical aryle carbocyclique ou hétérocyclique en C₆-C₂₀, ledit radical hétérocyclique pouvant contenir comme hétéroéléments de l'azote et/ou du soufre,
• les radicaux R², identiques ou différents, répondent à la même définition que R¹ ou représentent un radical alkyle linéaire ou ramifié en C₁-C₃₀, ou un radical alkényle linéaire ou ramifié en C₁-C₃₀,
• lesdits radicaux R¹ et R² étant éventuellement substitués par :
• un groupement alkyle linéaire ou ramifié en C₁-C₃₀,
• un groupement alcoxy OR¹²,
• un groupement cétonique -(C=O)-R¹²
• un groupement ester ou carboxylique -(C=O)-O-R¹²,
• un groupement mercapto SR¹²,
• un groupement mercapto SOR¹²,
R¹² étant un radical choisi parmi le groupe constitué d'un atome d'hydrogène, un radical linéaire ou ramifié en C₁-C₂₅, un radical aryl en C₆-C₃₀, ou un radical alkylaryl dont la partie alkyle est linéaire ou ramifiée en C₁-C₂₅ et la partie aryle est en C₆-C₃₀,
• un groupement nitro,
• un atome de chlore,
• un atome de brome,
• et/ou un groupement cyano,
• n est un nombre entier allant de 1 à v+1, v étant la valence de l'iode,
• m est un nombre entier allant de 0 à v-1, avec n + m = v+1 ;
et d'au moins une entité cationique de type borate d'onium de formule **(II):**
[BXₐR³_{b}]⁻ (II)
dans laquelle :
• a et b sont des nombres entiers tels que 0 ≤ a ≤ 4, 0 ≤ b ≤ 4, et a + b = 4,
• les symboles X, identiques ou différents, représentent :
• un atome d'halogène choisi parmi le chlore et/ou le fluor avec 0 ≤ a ≤ 3,
• une fonction OH avec 0 ≤ a ≤ 2,
• et les radicaux R³, identiques ou différents, représentent :
• un radical phényle substitué par au moins un groupement électroattracteur tel que -CF₃, -OCF₃, -NO₂, -CN, -SO₂R³⁰, -O(C=O)-R³⁰, -O-CₙF₂ₙ₊₁, - CₙF₂ₙ₊₁, R³⁰ étant CₙF₂ₙ₊₁ avec n=1 à 20, ou substitué par au moins 2 atomes d'halogène, en particulier de fluor,
• un radical aryle contenant au moins deux noyaux aromatiques tel que biphényle, naphtyle, éventuellement substitué par au moins un atome d'halogène, notamment un atome de fluor ou un groupement électroattracteur tel que -CF₃, -OCF₃, -NO₂, -CN, -SO₂R¹⁴, -O(C=O)-R¹⁴, R¹⁴ étant -O-CₙF₂ₙ₊₁, -CₙF₂ₙ₊₁, n étant un nombre entier compris entre 1 et 20 ;
- une quantité efficace d'au moins un photosensibilisateur PSC choisi parmi les diéthers de formule **(III)** -
→ parmi les diéther- anthracènes de formule **(III.1)** : 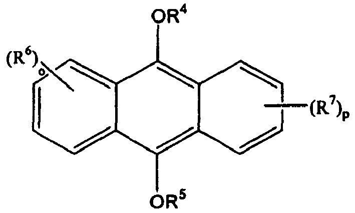
→ et/ou parmi les diéther-naphtalènes de formule **(III.2) :** 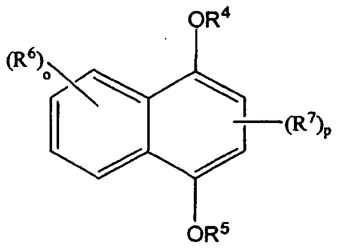
→ et/ou parmi les diéther-benzènes de formule **(III.3) :** 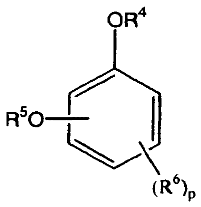
dans lesquelles :
• les groupements R⁴ et R⁵ identiques ou différents, représentent un radical alkyle linéaire ou ramifié en C₁-C₃₀, un radical alcényle linéaire ou ramifié en C₁-C₃₀, de préférence un allyle, un radical aryle en C₆-C₂₀, de préférence un benzyle, lesdits radicaux R⁴ et R⁵ étant éventuellement substitués par un groupement alcoxy OR⁴⁵, R⁴⁵ étant un radical choisi parmi le groupe constitué d'un atome d'hydrogène, un radical linéaire ou ramifié en C₁-C₂₅, un radical aryl en C₆-C₃₀, ou un radical alkylaryl dont la partie alkyle est linéaire ou ramifiée en C₁-C₂₅ et la partie aryle est en C₆-C₃₀,
• et les groupements R⁶ et R⁷, identiques ou différents, représentent un radical non réactif à l'éthérification choisi parmi un radical alcényle linéaire ou ramifié en C₁-C₃₀, un radical alcoxy répondant à la même définition que celle donnée ci-avant pour OR⁴⁵, un radical amino, un radical alkylamino, un radical alkylsulfonyle, un radical alcoxycarbonyle ou un radical halogèno,
• o et p sont des nombres entiers tels que 0 ≤ o ≤ 4,0 ≤ p ≤ 4 ;
- éventuellement une quantité efficace d'au moins un photosensibilisateur PSD choisi parmi les thioxanthones de formule **(IV)** : 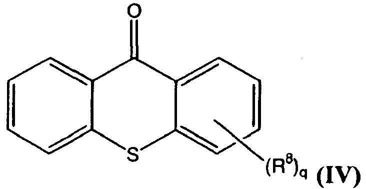 dans laquelle :
les groupements R⁸, identiques ou différents, représentent un radical alkyle linéaire ou ramifié en C₁-C₁₂, un radical cycloalkyle linéaire ou ramifié en C₆-C₁₂, de préférence un allyle, un radical aryle en C₆-C₂₀, de préférence un benzyle, un radical amino, hydroxy, -CN, -NO₂, -halogèno, -COOR⁹, -CHO, -O-phényle, - SO₂-phényle, -O-alcényle ou -SiR⁹, avec R⁹ correspondant à un alkyle inférieur en C₁-C₁₂ ;
- éventuellementau moins un agent de dissolution E de l'amorceur B et/ou de PSC et/ou de PSD ;
- éventuellement au moins un solvant organique, de préférence alcoolique ;
b. appliquer le mélange obtenu sur un support ; et
c. faire durcir la composition par réticulation en un film ou revêtement dur par voie thermique ou actinique.

2. Procédé selon la revendication 1, **caractérisé en ce que** le monomère, oligomère et/ou polymère réticulable et/ou polymérisable A, est de nature organique et/ou de nature polyorganosiloxanique.

3. Procédé selon la revendication 2, **caractérisé en ce que** le monomère, oligomère et/ou polymère A est de nature organique et est porteur de groupements organofonctionnels appartenant à au moins l'une des espèces suivantes :
- α_{1.1} les époxydes cycloaliphatiques, pris à eux seuls ou en mélange entre eux,
- α_{1.2} les époxydes non cycloaliphatiques, pris à eux seuls ou en mélange entre eux,
- α₂ les alcényl-éthers, linéaires ou cycliques, pris à eux seuls ou en mélange entre eux,
- α₃ les polyols : pris à eux seuls ou en mélange entre eux.

4. Procédé selon la revendication 3, **caractérisée en ce que** le monomère, oligomère et/ou polymère A de nature organique est choisi dans le groupe formé par :
- les espèces au consistant dans le 3,4-époxycyclohexylméthyl-3',4'-époxycyclo-hexane carboxylate et le bis(3,4-époxycyclohexyl)adipate ;
- les espèces α_{1.2} consistant dans :
• les époxydes du type de ceux résultant de la condensation de bis-phénol A éventuellement alkoxylé et d'épichlorhydrine et éventuellement de 1,6-hexanediol, de glycérol, de néopentylglycol ou de propane triméthylol,
• les époxydes NOVOLAC,
• les polymères diéniques époxydés et monohydroxylé, saturés ou insaturés ;
- les espèces α₂ de consistant dans les vinyl-éthers, les propényl-éthers et les butényl-éthers.

5. Procédé selon la revendication 2, **caractérisé en ce que** le monomère, oligomère et polymère à groupements organofonctionnels est de nature polyorganosiloxanique, et constitué de motifs de formule **(VI)** et terminé par des motifs de formule **(VII)** ou cycliques constitués de motifs de formule **(VI)** représentées ci-dessous : 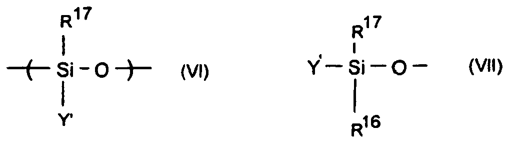 dans lesquelles :
- le symbole R¹⁶ est un radical alkyl linéaire ou ramifié en C₁-C₃₀;
- les symboles R¹⁷ sont semblables ou différents et représentent :
• un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
• un radical cycloalkyle contenant entre 5 et 8 atomes de carbone cycliques, éventuellement substitué,
• un radical aryle contenant entre 6 et 12 atomes de carbone pouvant être substitué, de préférence phényle ou dichlorophényle,
• une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone ;
- les symboles Y' sont semblables ou différents et représentent :
• le groupement R¹⁷,
• un radical hydrogène,
• et/ou un groupement organofonctionnel réticulable par voie cationique, de préférence un groupement époxyfonctionnel et/ou vinyloxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
• et l'un au moins des symboles Y' représentant un groupement organique fonctionnel réticulable par voie cationique.

6. Procédé selon la revendication 5, **caractérisé en ce qu'**au moins un des symboles R¹⁷ des polyorganosiloxanes utilisés représente un radical phényle, tolyle ou dichlorophényle.

7. Procédé selon la revendication 5 ou 6, **caractérisé en ce que** la composition polymérisable et/ou réticulable comprend en outre des monomères, oligomères et/ou polymères à groupements organofonctionnels définis en accord avec la revendication 3 ou 4.

8. Procédé selon l'une quelconque des revendications précédentes, **caractérisé en ce que** la composition polymérisable et/ou réticulable comprend de plus, des monomères, oligomères et/ou polymères à groupements organofonctionnels d'espèce acrylate; et notamment acrylates époxydés, acrylo-glycéro-polyesters, acrylates multifonctionnels, acrylo-uréthanes, acrylo-polyéthers, acrylo-polyesters, polyesters insaturés, acrylo-acryliques.

9. Procédé selon l'une quelconque des revendications précédentes, **caractérisé en ce que** :
➢ le monomère, oligomère et/ou polymère A est choisi dans le groupe comprenant : 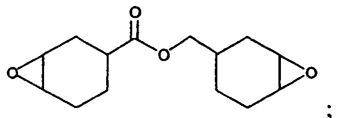 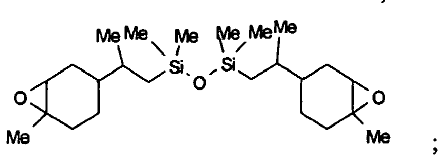 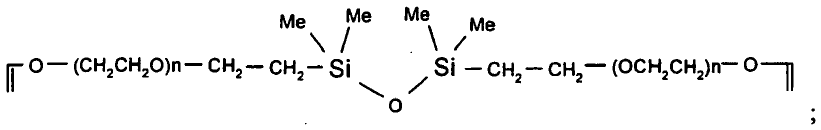 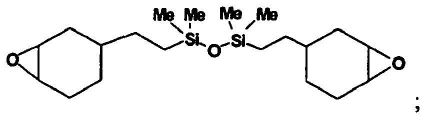 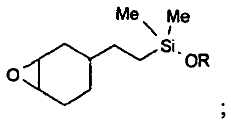 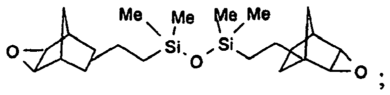 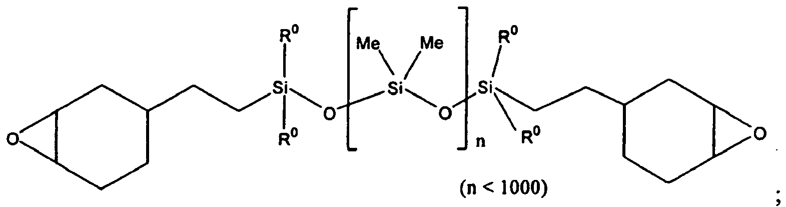 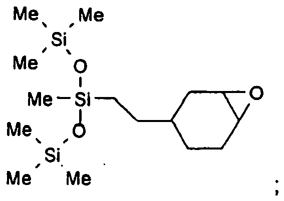 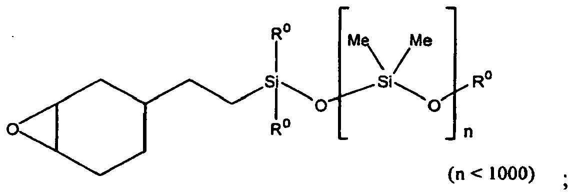 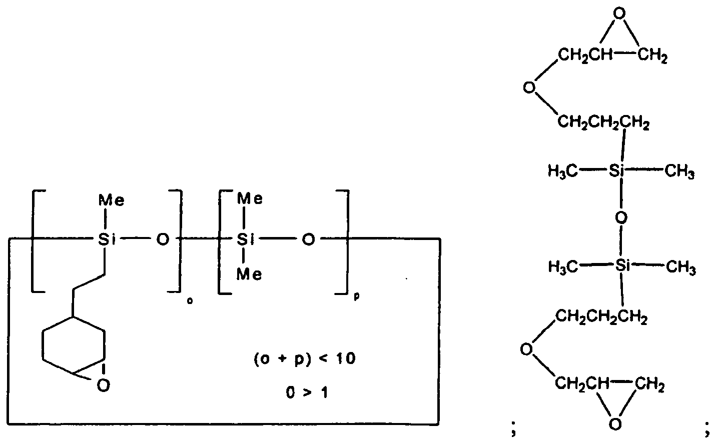 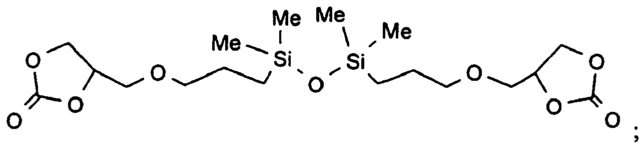 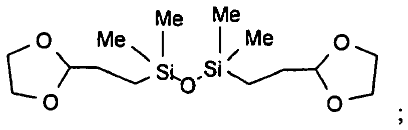 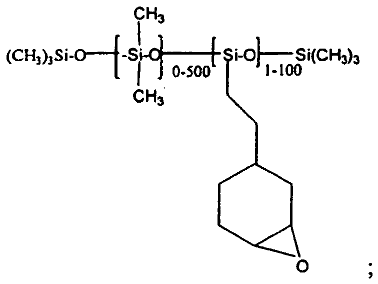 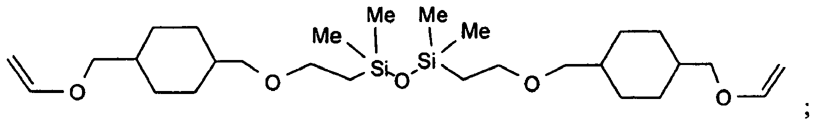
➢ le monomère, oligomère et/ou polymère A est porteur d'au moins un groupement fonctionnel choisi dans le groupe comprenant : 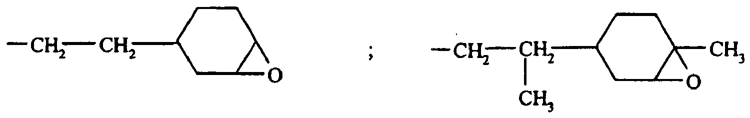 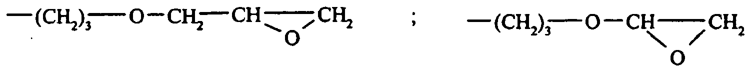 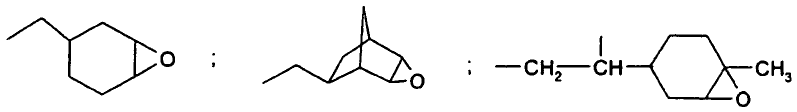 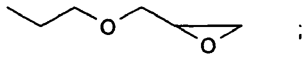 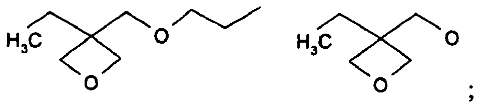 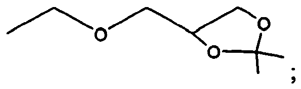
-(CH₂)₃-O-CH=CH₂ ; -(CH₂)₃-O-R¹⁸-O-CH=CH₂ ; -(CH₂)₃-O-CH=CH-R¹⁹
dans lesquelles :
• R¹⁸ représente :
- un radical alkylène linéaire ou ramifié en C₁-C₁₂, éventuellement substitué,
- ou un radical arylène en C₅-C₁₂, de préférence phénylène, éventuellement substitué, de préférence par un à trois groupements alkyles en C₁-C₆,
• R¹⁹ représente un radical alkyle linéaire ou ramifié en C₁-C₆.

10. Procédé selon l'une quelconque des revendications précédentes, **caractérisé en ce que** le photoamorceur B est choisi parmi le groupe constitué par les borates d'onium :
→ dont l'entité anionique est choisie parmi le groupe constitué de :
[B(C₆F₅)₄]⁻, [B(C₆H₃(CF₃)₂)₄)]⁻, [B(C₆H₄OCF₃)₄)]⁻, [B(C₆H₄CF₃)₄)]⁻, [(C₆F₅)₂BF₂]⁻, [C₆F₅BF₃]⁻, [B(C₆H₃F₂)₄]⁻, et leur mélanges ;
de préférence dans le sous-groupe constitué de B(C₆F₅)₄⁻, [B(C₆H₃(CF₃)₂)₄]⁻, [B(C₆H₄OCF₃)₄]⁻ et leur mélanges;
→ et dont l'entité cationique du borate de iodonium est choisie parmi le groupe constitué de :
[(C₆H₅)₂I]⁺,
[C₈H₁₇-O-C₆H₄-I-C₆H₅]⁺,
[C₁₂H₂₅-C₆H₄-I-C₆H₅]⁺,
[(C₈H₁₇-O-C₆H₄)₂I]⁺,
[(C₈H₁₇)-O-C₆H₄-I-C₆H₅)]⁺,
[(C₁₂H₂₅-C₆H₄)₂I]⁺,
[(CH(CH₃)₂-C₆H₄)-I-C₆H₄-CH₃]⁺,
[C₆H₅-O-C₆H₄-I-C₆H₅]⁺,
[C₆H₅-(C=O)-C₆H₄-I-C₆H₅]⁺,
[C₆H₅-O-C₆H₄-I-C₆H₄-O-C₆H₅]⁺,
[C₆H₅-(C=O)-C₆H₄-I-C₆H₄-(C=O)-C₆H₅]⁺,
[C₆H₅-I-C₆H₄-O-CH₂-O-C(OH)-C₁₂H₂₅]⁺,
et leurs mélanges.

11. Procédé selon l'une quelconque des revendications précédentes, **caractérisé en ce que** le photosensibilisateur PSC est choisi parmi :
→ les diéther-anthracènes de formules suivantes : 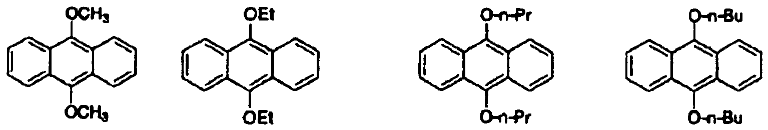 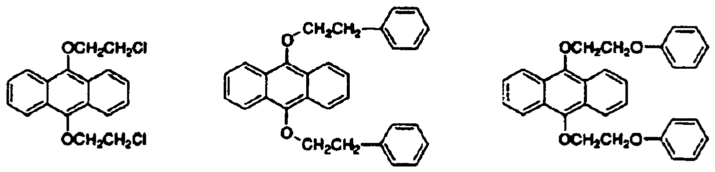 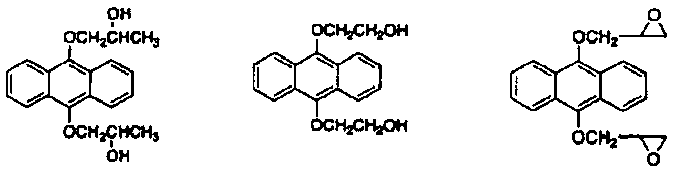 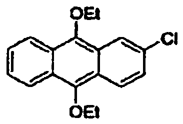 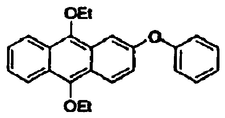
et/ou les diéther-naphtalènes de formules suivantes : 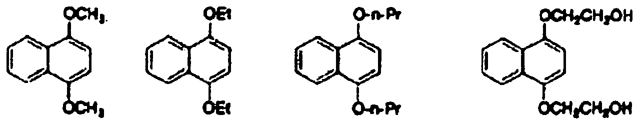 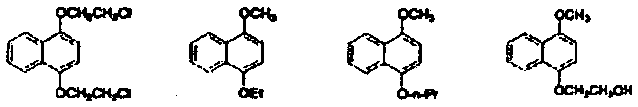 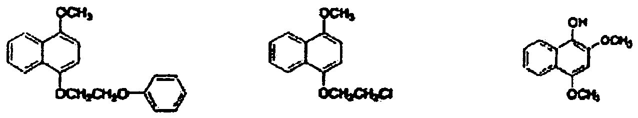 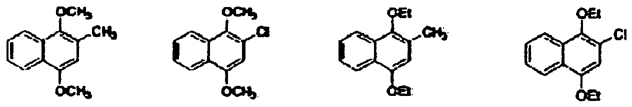 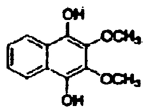 et/ou le diéther-benzène de formule suivante :

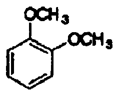

12. Procédé selon l'une quelconque des revendications précédentes, **caractérisé en ce que** en % en poids:
→ A ≥ 50
→ B ≤ 5
→ 0,01 ≤ C ≤ 0,1
→ 0 ≤ D ≤ 50
→ 0 ≤ E ≤ 50
→ 0 ≤ F ≤ 50

13. Film ou revêtement dur obtenu à partir du procédé selon l'une des revendications 1 à 12.

14. Film ou revêtement selon la revendication 13, **caractérisé en ce que** le revêtement est un vernis, un revêtement adhésif, un revêtement anti-adhérent et/ou une encre.

15. Matériau composite susceptible d'être obtenu à partir d'un film ou revêtement dur obtenu par le procédé selon l'une quelconque des revendications 1 à 12.

16. Objet dont une surface au moins est revêtue de film ou revêtement selon la revendication 13 ou 14, ou d'un matériau composite selon la revendication 15.

17. Utilisation d'une quantité efficace d'au moins un photosensibilisateur PSC choisi parmi les diéthers de formule (III) tels que définis dans la revendication 1 ou 11 dans une composition polymérisable et/ou réticulable par voie cationique, sous activation thermique et/ou actinique et/ou par faisceau d'électrons (de préférence actinique) comprenant au moins un monomère, oligomère et/ou polymère A tel que défini dans l'une des revendications 1 à 9, au moins un photoamorceur B tel que défini dans la revendication 1 ou 10, éventuellement une quantité efficace d'au moins un photosensibilisateur PSD tel que défini dans la revendication 1 ou choisi parmi les sels de thioxanthone substituée par au moins un groupement G comprenant une fonction ammonium et ayant pour formule (V): 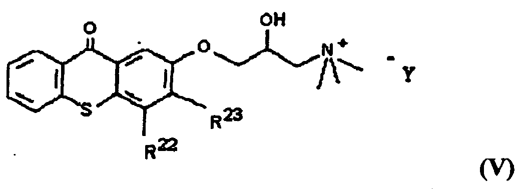 dans laquelle :
- R²² et R²³ sont identiques ou différents et représentent un hydrogène ou un radical alkyle en C₁-C₁₀, éventuellement substitué, de préférence R²² = R²³ = méthyle ;
- (Y⁻) étant une entité anionique choisie parmi le groupe constitué par : BF₄⁻, PF₆⁻; SbF₆⁻; l'anion **(II)** de formule [BXₐR³_{b}]⁻ défini dans la revendication 1, RfSO₃⁻ ; (RfSO₂)₃C⁻ ou (RfSO₂)₂N⁻, avec Rf étant un radical alkyle linéaire ou ramifié, substitué par au moins un atome d'halogène, préférentiellement un atome de fluor, et encore plus préférentiellement (Y⁻) est choisi parmi les borates de formules suivantes : [B(C₆F₅)₄]⁻ et [B(C₆H₃(CF₃)₂)₄]⁻ ;
éventuellement au moins un agent de dissolution E de l'amorceur B et/ou de PSC et/ou de PSD tel que défini dans la revendication 1 et éventuellement au moins un solvant organique F tel que défini dans la revendication 1 ;
pour réduire la quantité du photoamorceur B dans ladite composition.

## Claims

1. Method for preparing a hard film or coating, from a cationically polymerizable and/or cross-linkable composition, **characterized in that** it essentially comprises the stages consisting of:
a. mixing:
- at least one cross-linkable and/or polymerizable monomer, oligomer and/or silicone polymer A bearing organofunctional groups each comprising at least one reactive function selected from the group comprising the following functions: epoxy, alkenylether, oxetane, dioxolane, carbonate, (meth)acrylate and all combinations thereof, the epoxy function being preferred;
- an effective quantity of at least one cationic photoinitiator B based on at least one onium salt of formula **(I):**
[(R¹)ₙ-I-(R²)ₘ]⁺ (I)
in which:
• the R¹ radicals, identical or different, represent a carbocyclic or heterocyclic C₆-C₂₀ aryl radical, and said heterocyclic radical can contain nitrogen and/or sulphur as heteroelements,
• the R² radicals, identical or different, correspond to the same definition as R¹ or represent a linear or branched C₁-C₃₀ alkyl radical, or a linear or branched C₁-C₃₀ alkenyl radical,
• said R¹ and R² radicals being optionally substituted with:
• a linear or branched C₁-C₃₀ alkyl group,
• an alkoxy group OR¹²,
• a ketone group -(C=O)-R¹²
• an ester or carboxyl group -(C=O)-O-R¹²,
• a mercapto group SR¹²,
• a mercapto group SOR¹²,
R¹² being a radical selected from the group comprising a hydrogen atom, a linear or branched C₁-C₂₅ radical, a C₆-C₃₀ aryl radical, or an alkaryl radical whose alkyl part is linear or branched C₁-C₂₅ and the aryl part is C₆-C₃₀,
o a nitro group,
o a chlorine atom,
o a bromine atom,
o and/or a cyano group,
• n is an integer ranging from 1 to v+1, v being the valency of iodine,
• m is an integer ranging from 0 to v-1, with n + m = v+1;
and at least one cationic entity of the onium borate type of formula **(II):**
[BXₐR³_{b}]⁻ **(II)**
in which:
• a and b are integers such that 0 ≤ a ≤ 4, 0 ≤ b ≤ 4, and a + b = 4,
• the symbols X, identical or different, represent:
• a halogen atom selected from chlorine and/or fluorine with 0 ≤ a ≤ 3,
• an OH function with 0 ≤ a ≤ 2,
• and the R³ radicals, identical or different, represent:
• a phenyl radical substituted with at least one electron-accepting group such as -CF₃, -OCF₃, -NO₂, -CN, -SO₂R³⁰, -O(C=O)-R³⁰, -O-CₙF₂ₙ₊₁, -CₙF₂ₙ₊₁, R³⁰ being CₙF₂ₙ₊₁ with n=1 to 20, or substituted with at least 2 halogen atoms, in particular fluorine atoms,
• an aryl radical containing at least two aromatic rings such as biphenyl, naphthyl, optionally substituted with at least one halogen atom, in particular a fluorine atom or an electron-accepting group such as -CF₃, - OCF₃, -NO₂, -CN, -SO₂R¹⁴, -O(C=O)-R¹⁴, R¹⁴ being -O-CₙF₂ₙ₊₁, - CₙF₂ₙ₊₁, n being an integer between 1 and 20;
- an effective quantity of at least one photosensitizer PSC selected from the diethers of formula **(III):**
→ from the di-anthracene-ethers of formula **(III.1):** 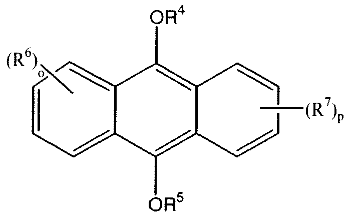
→ and/or from the di-naphthalene-ethers of formula **(III.2):** 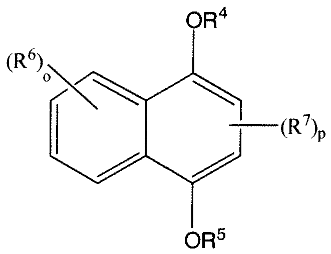
→ and/or from the di-benzene-ethers of formula **(III.3):** 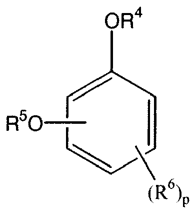 in which:
• the R⁴ and R⁵ groups, identical or different, represent a linear or branched C₁-C₃₀ alkyl radical, a linear or branched C₁-C₃₀ alkenyl radical, preferably an allyl, a C₆-C₂₀ aryl radical, preferably a benzyl,
said R⁴ and R⁵ radicals being optionally substituted with an alkoxy group OR⁴⁵, R⁴⁵ being a radical selected from the group comprising a hydrogen atom, a linear or branched C₁-C₂₅ radical, a C₆-C₃₀ aryl radical, or an alkaryl radical whose alkyl part is linear or branched C₁-C₂₅ and the aryl part is C₆-C₃₀,
• and the R⁶ and R⁷ groups, identical or different, represent a radical that is unreactive in etherification, selected from a linear or branched C₁-C₃₀ alkenyl radical, an alkoxy radical corresponding to the same definition as that given previously for OR⁴⁵, an amino radical, an alkylamino radical, an alkylsulphonyl radical, an alkoxycarbonyl radical or a halogen radical,
• o and p are integers such that 0 ≤ o ≤ 4, 0 ≤ p ≤ 4;
optionally an effective quantity of at least one photosensitizer PSD selected from the thioxanthones of formula (IV): 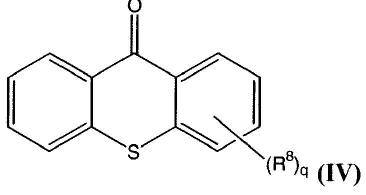 in which:
the R⁸ groups, identical or different, represent a linear or branched C₁-C₁₂ alkyl radical, a linear or branched C₆-C₁₂ cycloalkyl radical, preferably an allyl, a C₆-C₂₀ aryl radical, preferably a benzyl, an amino, hydroxy, -CN, -NO₂, -halogeno, -COOR⁹, -CHO, -O-phenyl, -SO₂-phenyl, -O-alkenyl or -SiR⁹ radical, with R⁹ corresponding to a C₁-C₁₂ lower alkyl;
- optionally at least one dissolving agent E of initiator B and/or of PSC and/or of PSD;
- optionally at least one organic solvent, preferably alcoholic;
b. applying the mixture obtained on a substrate; and
c. hardening the composition by cross-linking to a hard film or coating by the action of heat or radiation.

2. Method according to claim 1, **characterized in that** the cross-linkable and/or polymerizable monomer, oligomer and/or polymer A is of organic nature and/or of polyorganosiloxane nature.

3. Method according to claim 2, **characterized in that** the monomer, oligomer and/or polymer A is of organic nature and bears organofunctional groups belonging to at least one of the following species:
- α_{1.}1 the cycloaliphatic epoxides, used alone or as a mixture thereof,
- α_{1.2} the non-cycloaliphatic epoxides, used alone or as a mixture thereof,
- α₂ the linear or cyclic alkenyl-ethers, used alone or as a mixture thereof,
- α₃ the polyols: used alone or as a mixture thereof.

4. Method according to claim 3, **characterized in that** the monomer, oligomer and/or polymer A of organic nature is selected from the group comprising:
- the species α_{1.1} consisting of 3,4-epoxycyclohexylmethyl-3',4'-epoxycyclohexane carboxylate and bis(3,4-epoxycyclohexyl)adipate;
- the species α_{1.2} consisting of:
• the epoxides such as those resulting from the condensation of bis-phenol A optionally alkoxylated and of epichlorohydrin and optionally of 1,6-hexanediol, of glycerol, of neopentylglycol or of propane trimethylol,
• the NOVOLAC epoxides,
• the epoxidized and monohydroxylated, saturated or unsaturated diene polymers;
- the species α₂ consisting of the vinyl-ethers, propenyl-ethers and butenyl-ethers.

5. Method according to claim 2, **characterized in that** the monomer, oligomer and polymer with organofunctional groups is of polyorganosiloxane nature, and constituted by units of formula **(VI)** and terminated by units of formula **(VII)** or cyclic constituted by units of formula **(VI)** represented below: 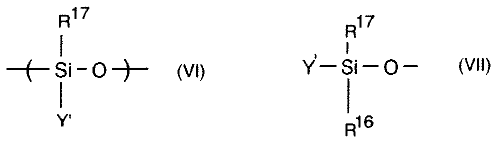 in which:
- the symbol R¹⁶ is a linear or branched C₁-C₃₀ alkyl radical;
- the symbols R¹⁷ are similar or different and represent:
• a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
• a cycloalkyl radical containing between 5 and 8 cyclic carbon atoms, optionally substituted,
• an aryl radical containing between 6 and 12 carbon atoms which can be substituted, preferably phenyl or dichlorophenyl,
• an aralkyl part having an alkyl part containing between 5 and 14 carbon atoms and an aryl part containing between 6 and 12 carbon atoms, optionally substituted on the aryl part with halogens, alkyls and/or alkoxyls containing 1 to 3 carbon atoms;
- the symbols Y' are similar or different and represent:
• the R¹⁷ group,
• a hydrogen radical,
• and/or a cationically cross-linkable organofunctional group, preferably an epoxyfunctional and/or vinyloxyfunctional group, joined to the silicon of the polyorganosiloxane via a divalent radical containing from 2 to 20 carbon atoms and which can contain at least one heteroatom, preferably oxygen,
• and at least one of the symbols Y' represents a cationically cross-linkable functional organic group.

6. Method according to claim 5, **characterized in that** at least one of the symbols R¹⁷ of the polyorganosiloxanes used represents a phenyl, tolyl or dichlorophenyl radical.

7. Method according to claim 5 or 6, **characterized in that** the polymerizable and/or cross-linkable composition further comprises monomers, oligomers and/or polymers with organofunctional groups defined in accordance with claim 3 or 4.

8. Method according to any one of the preceding claims, **characterized in that** the polymerizable and/or cross-linkable composition additionally comprises monomers, oligomers and/or polymers with organofunctional groups of acrylate species; and in particular epoxidized acrylates, acrylo-glycero-polyesters, multifunctional acrylates, acrylo-urethanes, acrylo-polyethers, acrylo-polyesters, unsaturated acrylo-acrylic polyesters.

9. Method according to any one of the preceding claims, **characterized in that**:
➢ the monomer, oligomer and/or polymer A is selected from the group comprising: 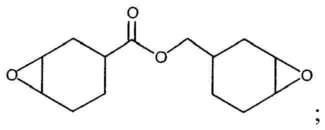 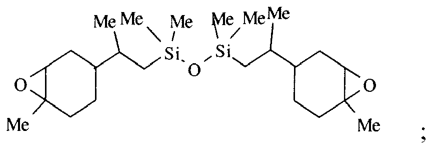 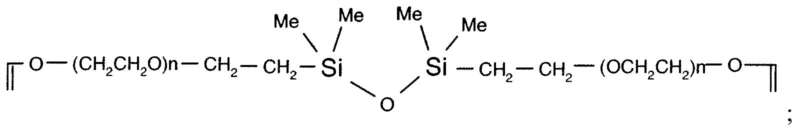 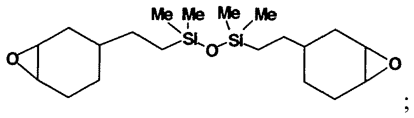 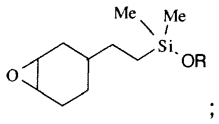 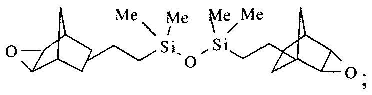 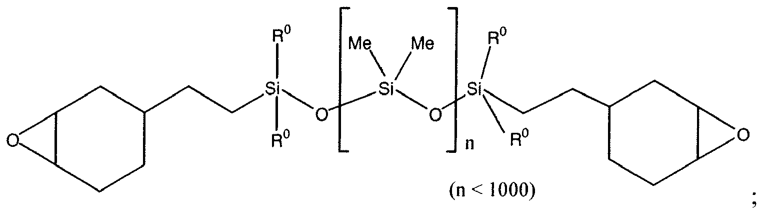 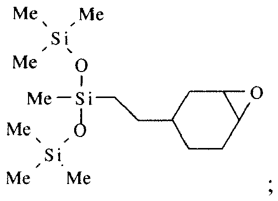 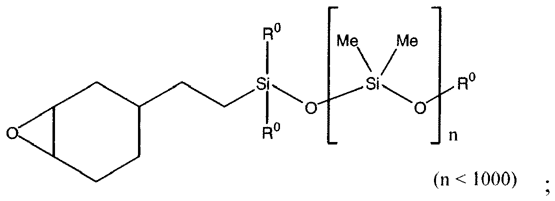 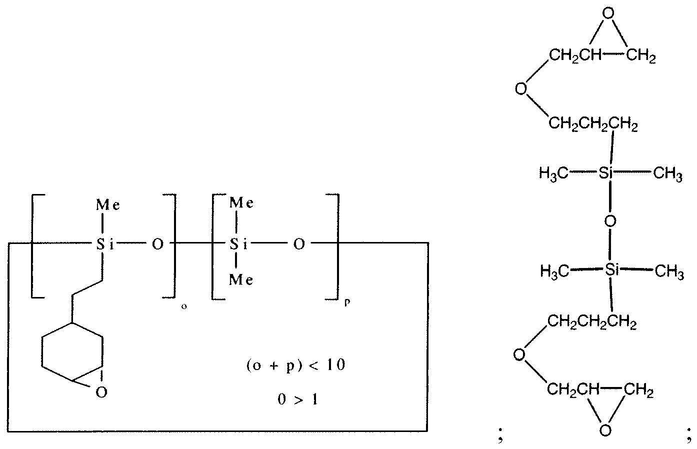 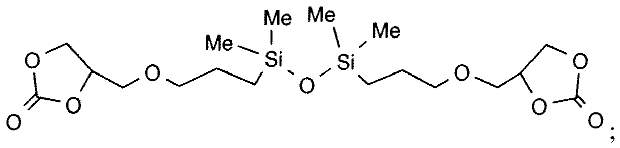 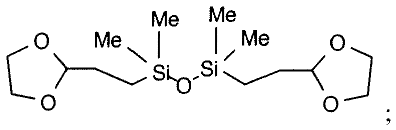 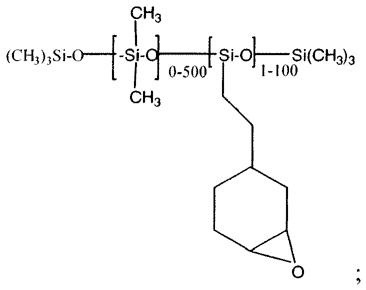 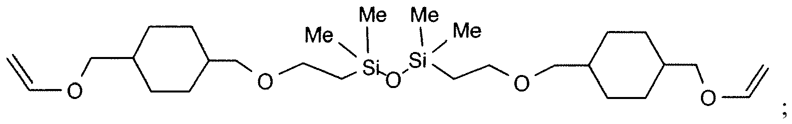
➢ the monomer, oligomer and/or polymer A bears at least one functional group selected from the group comprising: 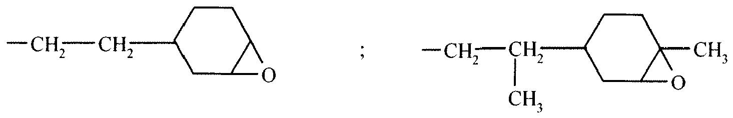 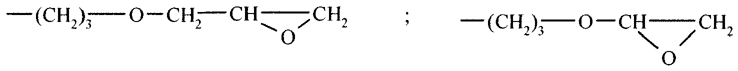 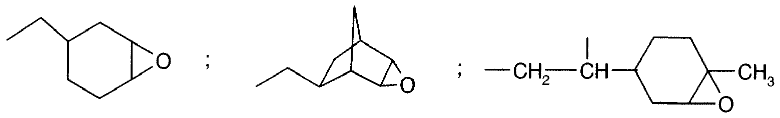 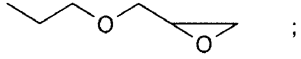 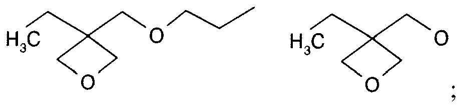 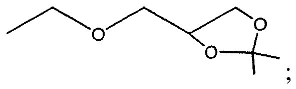 -(CH₂)₃-O-CH=CH₂ ; -(CH₂)₃-O-R¹⁸-O-CH=CH₂ ; -(CH₂)₃-O-CH=CH-R¹⁹
in which:
• R¹⁸ represents:
- a linear or branched C₁-C₁₂ alkylene radical, optionally substituted,
- or a C₅-C₁₂ arylene radical, preferably phenylene, optionally substituted, preferably with one to three C₁-C₆ alkyl groups,
• R¹⁹ represents a linear or branched C₁-C₆ alkyl radical.

10. Method according to any one of the preceding claims, **characterized in that** photoinitiator B is selected from the group comprising the onium borates:
→ whose anionic entity is selected from the group comprising:
[B(C₆F₅)₄]⁻, [B(C₆H₃(CF₃)₂)₄]⁻, [B(C₆H₄OCF₃)₄]⁻, [B(C₆H₄CF₃)₄]⁻, [(C₆F₅)BF₂]⁻, [C₆F₅BF₃]⁻, [B(C₆H₃F₂)₄]⁻, and mixtures thereof;
preferably from the subgroup comprising B(C₆F₅)₄⁻, [B(C₆H₃(CF₃)₂)₄]⁻, [B(C₆H₄OCF₃)₄]⁻ and mixtures thereof;
→ and whose cationic entity of the iodonium borate is selected from the group comprising:
[(C₆H₅)₂I]⁺,
[C₈H₁₇-O-C₆H₄-I-C₆H₅]⁺,
[C₁₂H₂₅-C₆H₄-I-C₆H₅]⁺,
[(C₈H₁₇O-C₆H₄)₂I]⁺,
[(C₈H₁₇)-O-C₆H₄-I-C₆H₅)]⁺,
[(C₁₂H₂₅-C₆H₄)₂I]⁺,
[(CH(CH₃)₂-C₆H₄)-I-C₆H₄-CH₃]⁺,
[C₆H₅-O-C₆H₄-I-C₆H₅]⁺,
[C₆H₅-(C=O)-C₆H₄-I-C₆H₅]⁺,
[C₆H₅-O-C₆H₄-I-C₆H₄-O-C₆H₅]⁺,
[C₆H₅-(C=O)-C₆H₄-I-C6H₄-(C=O)-C₆H₅]⁺,
[C₆H₅-I-C₆H₄-O-CH₂-O-C(OH)-C₁₂H₂₅]⁺,
and mixtures thereof.

11. Method according to any one of the preceding claims, **characterized in that** the photosensitizer PSC is selected from:
→ the di-anthracene-ethers of the following formulae: 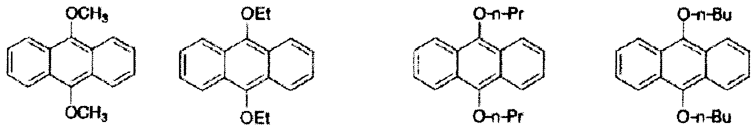 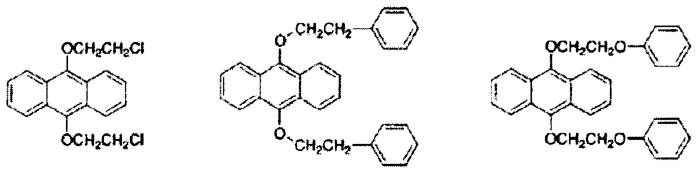 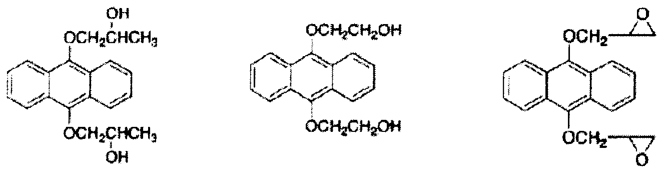 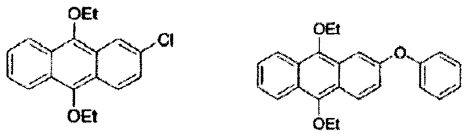
and/or the di-naphthalene-ethers of the following formulae: 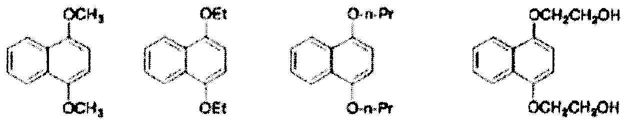 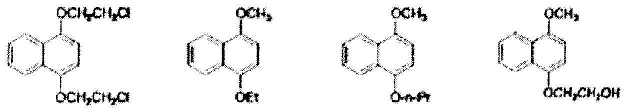 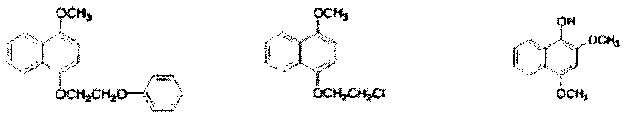 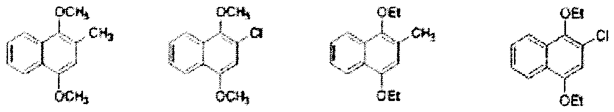 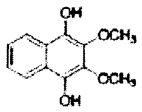 and/or the di-benzene-ether of the following formula:

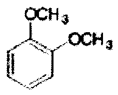

12. Method according to any one of the preceding claims, **characterized in that**, in wt.%:
→ A ≥ 50
→ B ≤ 5
→ 0.01 ≤ C ≤ 0.1
→ 0 ≤ D ≤ 50
→ 0 ≤ E ≤ 50
→ 0 ≤ F ≤ 50

13. Hard film or coating obtained by the method according to one of claims 1 to 12.

14. Film or coating according to claim 13, **characterized in that** the coating is a varnish, an adhesive coating, a non-stick coating and/or an ink.

15. Composite material that can be obtained from a hard film or coating obtained by the method according to any one of claims 1 to 12.

16. Object at least one surface of which is coated with film or coating according to claim 13 or 14, or with a composite material according to claim 15.

17. Use of an effective quantity of at least one photosensitizer PSC selected from the diethers of formula **(III)** as defined in claim 1 or 11 in a cationically polymerizable and/or cross-linkable composition, under thermal activation and/or actinic activation and/or by electron beam activation (preferably actinic) comprising at least one monomer, oligomer and/or polymer A as defined in one of claims 1 to 9, at least one photoinitiator B as defined in claim 1 or 10, optionally an effective quantity of at least one photosensitizer PSD as defined in claim 1 or selected from the thioxanthone salts substituted with at least one group G comprising an ammonium function and having the formula **(V):** 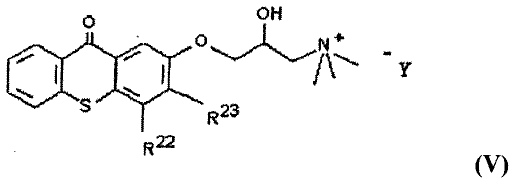 in which:
- R²² and R²³ are identical or different and represent a hydrogen or a C₁-C₁₀ alkyl radical, optionally substituted, preferably R²² = R²³ = methyl;
- (Y⁻) being an anionic entity selected from the group comprising: BF₄⁻, PF₆⁻; SbF₆⁻; the anion **(II)** of formula [BXₐR³_{b}]⁻ defined in claim 1, RfSO₃⁻; (RfSO₂)₃C⁻ or (RfSO₂)₂N⁻, where Rf is a linear or branched alkyl radical, substituted with at least one halogen atom, preferably a fluorine atom, and even more preferably (Y⁻) is selected from the borates of the following formulae: [B(C₆F₅)₄]⁻ and [B(C₆H₃(CF₃)₂)₄]^{-;}
optionally at least one dissolving agent E of the initiator B and/or of PSC and/or of PSD as defined in claim 1 and optionally at least one organic solvent F as defined in claim 1;
to reduce the quantity of photoinitiator B in said composition.

## Patentansprüche

1. Verfahren zur Herstellung einer harten Schicht oder einer harten Beschichtung aus einer kationisch polymerisierbaren und/oder vernetzbaren Zusammensetzung, **dadurch gekennzeichnet, daß** es im wesentlichen die folgenden Schritte umfaßt:
a) Mischen:
- mindestens eines vernetzbaren und/oder polymerisierbaren Silicon-Monomers, -Oligomers und/oder -Polymers A mit organofunktionellen Gruppen, die jeweils mindestens eine reaktive Funktion umfassen, die ausgewählt ist aus der Gruppe, die die folgenden Funktionen umfaßt: Epoxy, Alkenylether, Oxetan, Dioxolan, Carbonat, (Meth)acrylat und alle Kombinationen davon, wobei die Epoxy-Funktion bevorzugt ist;
- einer wirksamen Menge mindestens eines kationischen Photoinitiators B, basierend auf mindestens einem Oniumsalz der Formel (I):
[(R¹)ₙ-I-(R²)ₘ]⁺ (I)
worin:
• die Reste R¹, gleich oder verschieden, einen carbocyclischen oder heterocyclischen C₆₋₂₀-Aryl-Rest darstellen, wobei der heterocyclische Rest Stickstoff und/oder Schwefel als Heteroatom enthalten kann,
• die Reste R², gleich oder verschieden, wie R¹ definiert sind oder einen linearen oder verzweigten C₁₋₃₀-Alkyl-Rest oder einen linearen oder verzweigten C₁₋₃₀-Alkenyl-Rest darstellen,
• die besagten Reste R¹ und R² optional substituiert sind mit:
• einem linearen oder verzweigten C₁₋₃₀-Alkyl-Rest,
• einer Alkoxy-Gruppe, OR¹²,
• einer Keto-Gruppe -(C=O)-R¹²,
• einer Ester- oder Carboxyl-Gruppe -(C=O)-O-R¹²,
• einer Mercapto-Gruppe SR¹²,
• einer Mercapto-Gruppe SOR¹²,
wobei R¹² ein Rest ist, der aus der Gruppe ausgewählt ist, die ein Wasserstoffatom, einen linearen oder verzweigten C₁₋₂₅-Rest, einen C₆₋₃₀-Aryl-Rest, oder einen Alkylaryl-Rest, dessen Alkyl-Bestandteil lineares oder verzweigtes C₁₋₂₅ und der Aryl-Bestandteil C₆₋₃₀ ist, umfaßt,
• eine Nitro-Gruppe,
• ein Chloratom,
• ein Bromatom,
• und/oder eine Cyano-Gruppe
• n eine ganze Zahl ist im Bereich von 1 bis v+1, wobei v die Valenz von Iod ist,
• m eine ganze Zahl ist von 0 bis v-1, mit n+m=v+1;
und mindestens ein kationischer Bestandteil vom Oniumborat-Typ der Formel (II):
[BXₐR³_{b}]⁻ (II)
wobei:
• a und b ganze Zahlen sind wie 0 ≤ a ≤ 4, 0 ≤ b ≤ 4 und a + b = 4,
• die Symbole X, gleich oder verschieden, darstellen:
• ein Halogenatom, ausgewählt aus Chlor und/oder Fluor mit 0 < a < 3,
• eine OH-Funktion mit 0 < a < 2,
• und die Reste R³, gleich oder verschieden, darstellen:
• einen Phenyl-Rest, substituiert mit mindestens einer Elektronen-ziehenden Gruppe wie zum Beispiel -CF₃, -OCF₃, -NO₂, -CN, -SO₂R³⁰, -O(C=O)-R³⁰, -O-CₙF₂ₙ₊₁, -CₙF₂ₙ₊₁, R³⁰, wobei R³⁰ CₙF₂ₙ₊₁ mit n=1 bis 20 darstellt, oder mit mindestens 2 Halogenatomen substituiert ist, insbesondere mit Fluor,
• ein Aryl-Rest, der mindestens zwei aromatische Ringe enthält, wie zum Beispiel Biphenyl, Naphthyl, optional substituiert mit mindestens einem Halogenatom, insbesondere einem Fluoratom oder einer Elektronen-ziehenden Gruppe, wie zum Beispiel -CF₃, -OCF₃, -NO₂, -CN, -SO₂R¹⁴, -O(C=O)-R¹⁴, wobei R¹⁴ -O-CₙF₂ₙ₊₁, -CₙF₂ₙ₊₁ ist, und n eine ganze Zahl zwischen 1 bis 20 ist;
- einer wirksamen Menge von mindestens einem Photosensibilisator PSC, der ausgewählt ist aus Diethern der Formel (III):
→ aus den Diether-Anthracenen der Formel (III.1): 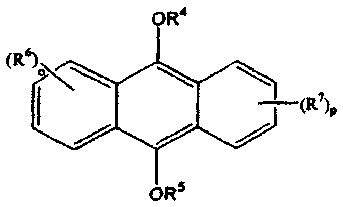
→ und/oder aus den Diether-Naphthalenen der Formel (III.2): 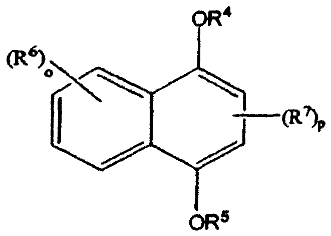
→ und/oder aus den Dibenzylethern der Formel (III.3) : 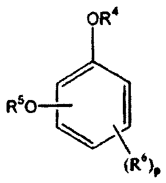 worin:
• die R⁴- und R⁵-Gruppen, gleich oder verschieden, einen linearen oder verzweigten C₁₋₃₀-Alkyl-Rest, einen linearen oder verzweigten C₁₋₃₀-Alkenyl-Rest, bevorzugt ein Allyl, einen C₆₋₂₀-Aryl-Rest, bevorzugt Benzyl, darstellen,
besagte R⁴- und R⁵-Reste optional substituiert sind mit einer Alkoxy-Gruppe OR⁴⁵, wobei R⁴⁵ ein Rest ist, der aus der Gruppe ausgewählt ist, die ein Wasserstoffatom, einen linearen oder verzweigten C₁₋₂₅-Rest, ein C₆₋₃₀-Aryl-Rest oder einen Alkylaryl-Rest, dessen Alkyl-Bestandteile lineares oder verzweigtes C₁₋₂₅-ist, und der Aryl-Bestandteil C₆₋₃₀ ist, umfaßt,
• und die R⁶- und R⁷-Gruppen, gleich oder verschieden, einen Rest darstellen, der bei der Veretherung unreaktiv ist, ausgewählt aus einem linearen oder verzweigten C₁₋₃₀-Alkenyl-Rest, einem Alkoxy-Rest, der derselben Definition entspricht, die zuvor für OR⁴⁵ gegeben wurde, einem Amino-Rest, einem Alkylamino-Rest, einem Alkylsulfonyl-Rest, einem Alkoxycarbonyl-Rest oder einem Halogen-Rest,
• o und p ganze Zahlen sind, so daß 0 ≤ o ≤ 4, 0 ≤ p ≤ 4;
- optional einer wirksamen Menge mindestens eines Photosensibilisators PSD, der aus den Thioxanthonen der Formel (IV) ausgewählt ist: 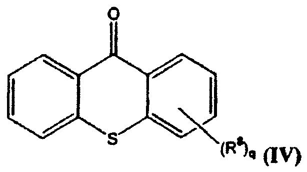 worin:
Die R⁸-Gruppen, gleich oder verschieden, einen linearen oder verzweigten C₁₋₁₂-Alkyl-Rest, einen linearen oder verzweigten C₆₋₁₂-Cycloalkyl-Rest, bevorzugt ein Allyl, einen C₆₋₂₀-Aryl-Rest, bevorzugt ein Benzyl-, ein Amino-, Hydroxy-, -CN, -NO₂, -Halogen, -COOR⁹, -CHO, -O-Phenyl, -SO₂-Phenyl, -O-Alkenyl oder -SiR⁹, wobei R⁹ ein niederes C₁₋₁₂-Alkyl darstellt, darstellen,
- optional mindestens eines Lösungsmittels E des Initiators B und/oder von PSC und/oder von PSD;
- optional mindestens eines organischen Lösungsmittels, bevorzugt eines alkoholischen;
b. Auftragen der erhaltenen Mischung auf ein Substrat; und
c. Aushärten der Zusammensetzung durch Vernetzung zu einer harten Schicht oder Beschichtung durch Einwirkung von Wärme oder Strahlung.

2. Verfahren gemäß Anspruch 1, **dadurch gekennzeichnet, daß** das vernetzbare und/oder polymerisierbare Monomer, Oligomer und/oder Polymer A organischer Natur ist und/oder Polyorganosiloxan-Natur hat.

3. Verfahren gemäß Anspruch 2, **dadurch gekennzeichnet, daß** das Monomer, Oligomer und/oder Polymer A organischer Natur ist und organofunktionelle Gruppen besitzt, die zumindest zu einer der folgenden Spezies gehören:
- α_{1.1} die cycloaliphatischen Epoxide, allein oder als Mischung davon verwendet,
- α_{1.2} die nicht-cycloaliphatischen Epoxide, allein oder als Mischung davon verwendet,
- α₂ die linearen oder cyclischen Alkenylether, die allein oder als Mischung davon verwendet werden,
- α₃ die Polyole: allein oder als Mischung davon verwendet.

4. Verfahren gemäß Anspruch 3, **dadurch gekennzeichnet, daß** das Monomer, Oligomer und/oder Polymer A organischer Natur ist und aus der Gruppe ausgewählt ist, die umfaßt:
- die Spezies α_{1.1}, die aus 3,4-Epoxycyclohexylmethyl-3',4'-epoxycyclohexancarboxylat und Bis(3,4-epoxycyclohexyl)adipat besteht;
- die Spezies α_{1.2}, die besteht aus:
• den Epoxiden , wie solche, die aus der Kondensation von optional alkoxylierten Bisphenol A und einem Epichlorhydrin und gegebenenfalls 1,6-Hexandiol, Glycerin, Neopentylglykol oder Propantrimethylol resultiert,
• den NOVOLAC-Epoxiden,
• den epoxidierten und monohydroxylierten, gesättigten oder ungesättigten Dien-Polymeren
- die Spezies α₂, die aus den Vinylethern, Propenylethern und Butenylethern besteht.

5. Verfahren gemäß Anspruch 2, **dadurch gekennzeichnet, daß** das Monomer, Oligomer und Polymer mit organofunktionellen Gruppen Polyorganosiloxannatur besitzt, und aus Einheiten der Formel (VI) besteht, und terminiert wird durch Einheiten der Formel (VII), oder cyclisch aufgebaut ist durch Einheiten der Formel (VI), wie unten dargestellt: 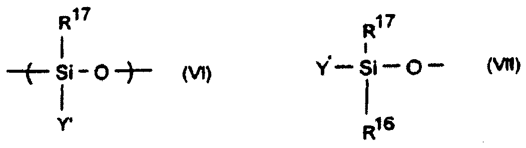 wobei:
- das Symbol R¹⁶ ein linearer oder verzweigter C₁₋₃₀-Alkyl-Rest ist;
- die Symbole R¹⁷ gleich oder verschieden sind und darstellen:
• einen linearen oder verzweigten Alkyl-Rest mit 1 bis 8 Kohlenstoffatomen, optional substituiert mit mindestens einem Halogen, bevorzugt Fluor, wobei der Alkyl-Rest bevorzugt Methyl, Ethyl, Propyl, Octyl und 3,3,3-Trifluorpropyl ist;
• einen Cycloalkyl-Rest, der zwischen 5 und 8 Kohlenstoffatome enthält, optional substituiert,
• einen Aryl-Rest, der zwischen 6 und 12 Kohlenstoffatomen optional substituiert enthält bevorzugt Phenyl oder Dichlorphenyl,
• einen Aralkyl-Teil, der einen Alkyl-Bestandteil besitzt, der zwischen 5 und 14 Kohlenstoffatomen enthält, und einen Aryl-Bestandteil, der zwischen 6 und 12 Kohlenstoffatomen enthält, optional substituiert in dem Aryl-Bestandteil mit Halogenen, Alkylen und/oder Alkoxylen, die 1 bis 3 Kohlenstoffatome enthalten;
- Die Symbole Y' sind gleich oder verschieden und stellen dar:
• Die R¹⁷-Gruppe,
• einen Wasserstoff-Rest,
• und/oder eine kationisch vernetzbare organofunktionelle Gruppe, bevorzugt eine epoxyfunktionale und/oder vinyloxyfunktionale Gruppe, die mit dem Silicium des Polyorganosiloxans über einen divalenten Rest verbunden ist, der 2 bis 20 Kohlenstoffatomen enthält und der mindestens ein Heteroatom, bevorzugt Sauerstoff, enthalten kann,
• und mindestens eines der Symbole Y' eine kationisch vernetzbare funktionelle organische Gruppe darstellt.

6. Verfahren gemäß Anspruch 5, **dadurch gekennzeichnet, daß** mindestens eines der Symbole R¹⁷ der verwendeten Polyorganosiloxane einen Phenyl-, Tolyl- oder Dichlorphenyl-Rest darstellt.

7. Verfahren gemäß Anspruch 5 oder 6, **dadurch gekennzeichnet, daß** die polymerisierbare und/oder vernetzbare Zusammensetzung außerdem Monomere, Oligomere und/oder Polymere mit organofunktionellen Gruppen wie definiert in Anspruch 3 oder 4 umfaßt.

8. Verfahren gemäß irgendeinem der vorhergehenden Ansprüche, **dadurch gekennzeichnet, daß** die polymerisierbare und/oder vernetzbare Zusammensetzung darüber hinaus Monomere, Oligomere und/oder Polymere mit organofunktionellen Gruppen der Acrylat-Spezies umfaßt; und insbesondere epoxidierte Acrylate, Acrylo-Glycero-Polyester, multifunktionelle Acrylate, Acrylo-Urethane, Acrylo-Polyether, Acrylo-Polyester, ungesättigte Polyester, ungesättigte acrylo-acrylische Polyester.

9. Verfahren gemäß irgendeinem der vorhergehenden Ansprüche, **dadurch gekennzeichnet, daß**:
> das Monomer, Oligomer und/oder Polymer A ausgewählt ist aus der Gruppe, die folgendes umfaßt: 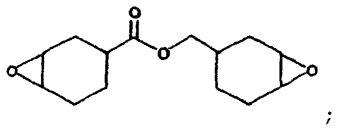 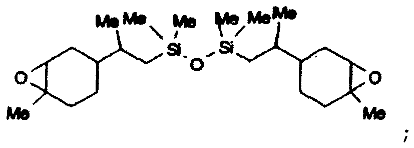 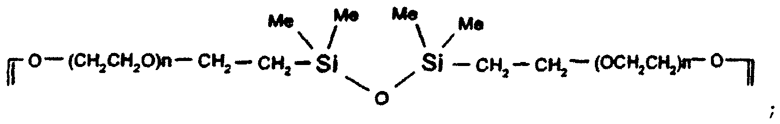 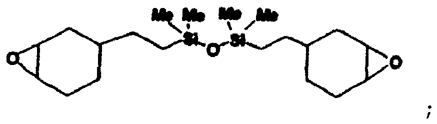 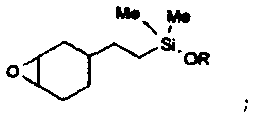 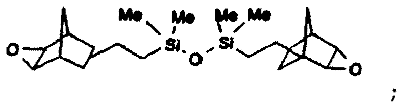 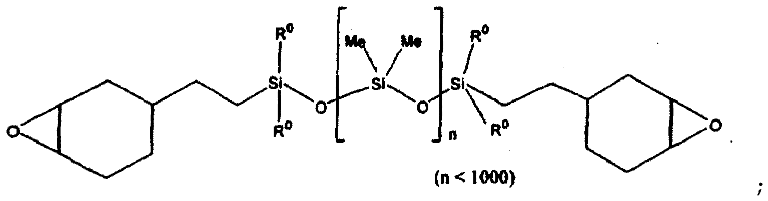 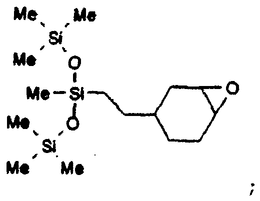 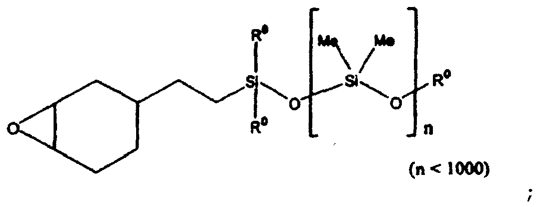 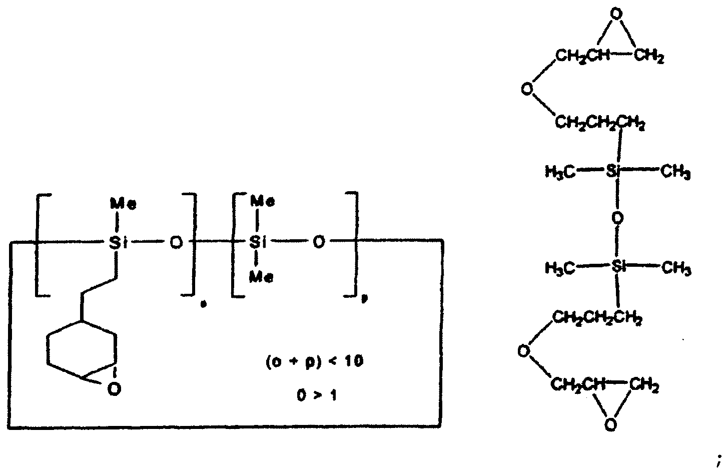 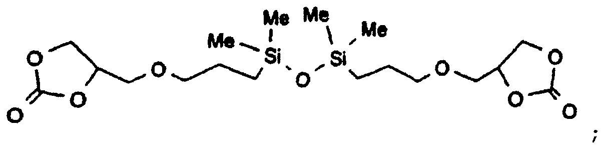 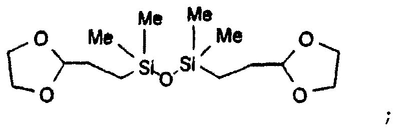 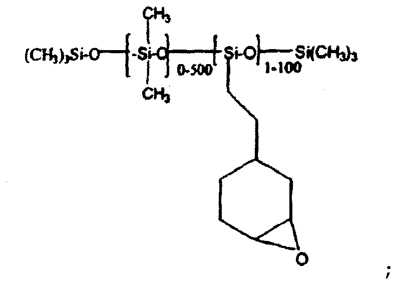 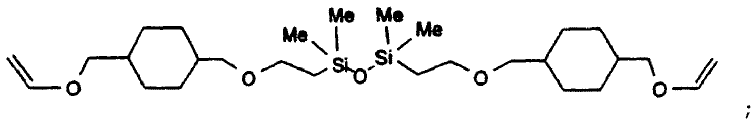
> das Monomer, Oligomer und/oder Polymer A mindestens eine funktionelle Gruppe trägt, die aus der Gruppe ausgewählt ist, die umfaßt: 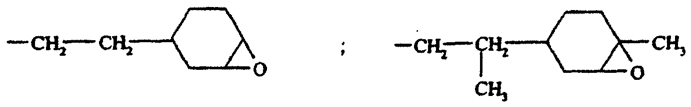 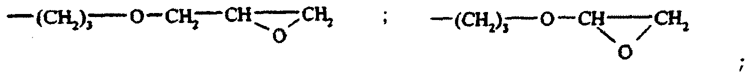 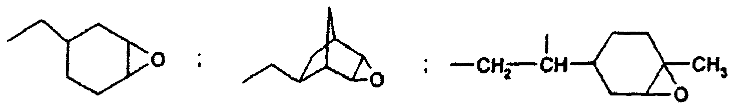 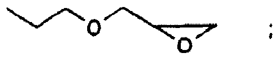 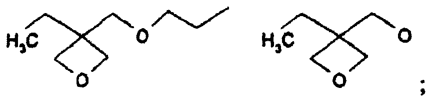 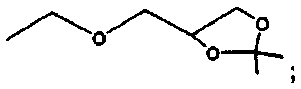 -(CH₂)₃-O-CH=CH₂; -(CH₂)₃-O-R¹⁸-O-CH=CH₂; -(CH₂)₃-O-CH=CH-R¹⁹,
worin:
• R¹⁸ darstellt:
- einen linearen oder verzweigten C₁₋₁₂-Alkylen-Rest, der optional substituiert ist,
- oder einen C₅₋₁₂-Arylen-Rest, bevorzugt Phenylen, der optional substituiert ist, bevorzugt mit 1 bis 3 C₁₋₆-Alkyl-Gruppen,
• R¹⁹ einen linearen oder verzweigten C₁₋₆-Alkyl-Rest darstellt.

10. Verfahren gemäß irgendeinem der vorhergehenden Ansprüche, **dadurch gekennzeichnet, daß** der Photoinitiator B ausgewählt ist aus der Gruppe, die die Oniumborate umfaßt:
→ deren anionischer Bestandteil aus der Gruppe ausgewählt ist, die umfaßt: [B(C₆F₅)₄]⁻, [B(C₆H₃(CF₃)₂)₄]⁻, [B(C₆H₄OCF₃)₄]⁻, [B(C₆H₄CF₃)₄]⁻, [(C₆F₅)₂BF₂]⁻, [C₆F₅BF₃]⁻, [B(C₆H₃F₂)₄]⁻, und Mischungen davon;
bevorzugt aus der Untergruppe, bestehend aus B(C₆F₅)₄⁻, [B(C₆H₃(CF₃)₂)₄]⁻, B(C₆H₄OCF₃)₄]⁻, und Mischungen davon;
→ und dessen kationischer Bestandteil des Iodoniumborats aus der Gruppe ausgewählt ist, die besteht aus:
[(C₆H₅)₂I]⁺,
[C₈H₁₇-O-C₆H₄-I-C₆H₅]⁺,
[C₁₂H₂₅-C₆H₅-I-C₆H₅]⁺,
[(C₈H₁₇O-C₆H₄)₂I]⁺,
[(C₈H₁₇)-O-C₆H₄-I-C₆H₅)]⁺,
[(C₁₂H2₅-C₆H₄)₂I]⁺ ,
[(CH(CH₃)₂-C₆H₄)-I-C₆H₄-CH₃]⁺ ,
[C₆H₅-O-C₆H₄-I-C₆H₅]⁺,
[C₆H₅-(C=O)-C₆H₄-I-C₆H₅]⁺ ,
[C₆H₅-O-C₆H₄-I-C₆H₄-O-C₆H₅]⁺ ,
[C₆H₅-(C=O)-C₆H₄-I-C₆H₄-(C=O)-C₆H₅]⁺ ,
[C₆H₅-I-C₆H₄-O-CH₂-O-C(OH)-C₁₂H₂₅]⁺
und Mischungen davon.

11. Verfahren gemäß irgendeinem der vorhergehenden Ansprüche, **dadurch gekennzeichnet, daß** der Photosensibilisator PSC ausgewählt ist aus:
→ den Dietheranthrazenen der folgenden Formeln: 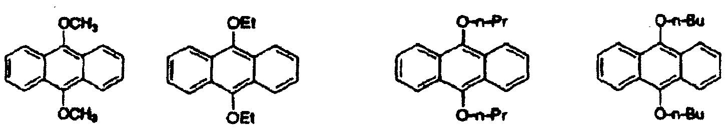 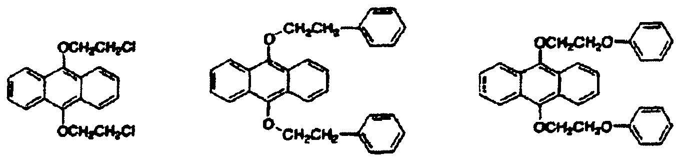 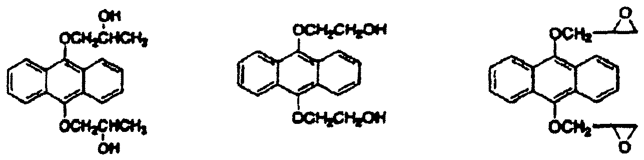 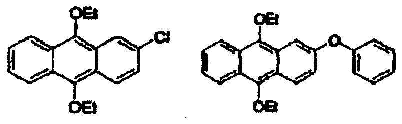
und/oder den Diether-naphthalenen der folgenden Formeln: 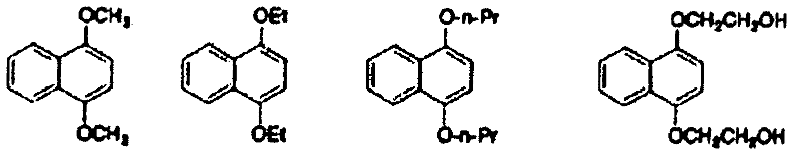 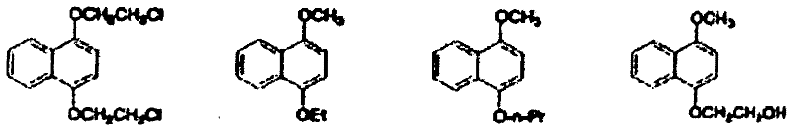 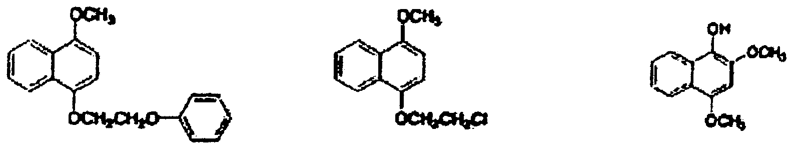 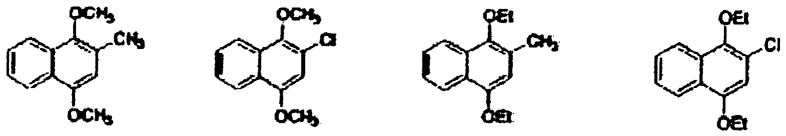 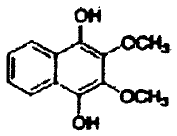 und/oder dem Dietherbenzol der folgenden Formel:

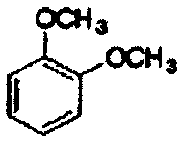

12. Verfahren gemäß irgendeinem der vorhergehenden Ansprüche, **dadurch gekennzeichnet, daß** in Gew.%:
→ A ≥ 50
→ B ≤ 5
→ 0,01 → C ≤ 0,1
→ 0 ≤ D ≤ 50
→ 0 ≤ E ≤ 50
→ 0 ≤ F ≤ 50

13. Harte Schicht oder Beschichtung, die durch ein Verfahren gemäß irgendeinem der Ansprüche 1 bis 12 erhalten wird.

14. Schicht oder Beschichtung gemäß Anspruch 13, **dadurch gekennzeichnet, daß** die Beschichtung ein Lack, eine Haftbeschichtung, eine Antihaftbeschichtung und/oder eine Tinte ist.

15. Verbundmaterial, das aus einer harten Schicht oder Beschichtung erhalten werden kann, die durch das Verfahren gemäß irgendeinem der Ansprüche 1 bis 12 erhalten wird.

16. Gegenstand, von dem mindestens eine Oberfläche mit der Schicht oder Beschichtung gemäß den Ansprüchen 13 oder 14 oder dem Verbundmaterial gemäß Anspruch 15 beschichtet ist.

17. Verwendung einer wirksamen Menge von mindestens einem Photosensibilisator PSC, der aus den Diethern der Formel (III), wie definiert in einem der Ansprüche 1 bis 11 ausgewählt ist, in einer kationisch polymerisierbaren und/oder vernetzbaren Zusammensetzung, unter thermischer Aktivierung und/oder aktinischer Aktivierung und/oder durch Aktivierung mit einem Elektronenstrahl (bevorzugt aktinisch), die mindestens ein Monomer, Oligomer und/oder Polymer A wie in einem der Ansprüche 1 bis 9 definiert umfaßt, mindestens einen Photoinitiator B wie in den Ansprüchen 1 oder 10 definiert, optional eine wirksame Menge mindestens eines Photosensibilisators PSD, wie definiert in Anspruch 1 oder ausgewählt aus den Thioxanthonsalzen, substituiert mit mindestens einer Gruppe G, umfassend eine Ammoniumfunktion mit der Formel (V): 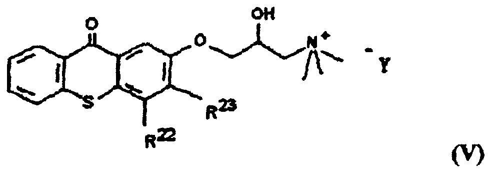 worin:
- R²² und R²³ gleich oder verschieden sind und ein Wasserstoff oder einen C₁₋₁₀-Alkyl-Rest, optional substituiert, darstellt, bevorzugt R²²=R²³=Methyl;
- (Y⁻) eine anionische Einheit ist, die aus der Gruppe ausgewählt ist, die umfaßt: BF₄⁻, PF₆⁻; SbF₆⁻, das Anion (II) der Formel [BXₐR³_{b}]⁻, wie definiert in Anspruch 1, RfSO₃⁻; (RfSO₂)₃C⁻ oder
(RfSO₂)₂N⁻, worin Rf ein linearer oder verzweigter Alkyl-Rest ist, substituiert mit mindestens einem Halogenatom, bevorzugt einem Fluoratom, und mehr bevorzugt (Y⁻) aus den Boraten der folgenden Formeln ausgewählt ist: [B(C₆F₅)₄]⁻ und [B(C₆H₃(CF₃)₂)₄]⁻;
optional mindestens ein Lösungsmittel E des Initiators B und/oder von PSC und/oder von PSD wie definiert in Anspruch 1 und optional mindestens ein organisches Lösungsmittel F, wie definiert in Anspruch 1;
um die Menge des Photoinitiators B in der besagten Zusammensetzung zu reduzieren.
